(19) Europäisches Patentamt
European Patent Office
Office européen des brevets

(11) **EP 3 898 813 B1**

(12) **EUROPÄISCHE PATENTSCHRIFT**

(45) Veröffentlichungstag und Bekanntmachung des Hinweises auf die Patenterteilung:
**30.10.2024   Patentblatt 2024/44**

(21) Anmeldenummer: **19824289.3**

(22) Anmeldetag: **16.12.2019**

(51) Internationale Patentklassifikation (IPC):
**C08K 5/00** (2006.01)   **C08K 5/10** (2006.01)
**C08K 5/20** (2006.01)   **C08K 5/34** (2006.01)
**C08K 5/524** (2006.01)   **C08K 9/06** (2006.01)
**C08K 3/34** (2006.01)   **C08K 3/22** (2006.01)
**C08K 5/01** (2006.01)   **C08K 5/09** (2006.01)
**C08K 5/098** (2006.01)   **C08K 5/544** (2006.01)

(52) Gemeinsame Patentklassifikation (CPC):
(C-Sets verfügbar)
**C08K 9/06; C08K 3/34; C08K 5/005; C08K 5/0083;**
**C08K 5/10; C08K 5/20; C08K 5/34; C08K 5/524;**
C08K 3/22; C08K 5/01; C08K 5/09; C08K 5/098;
C08K 5/544; C08K 2003/2227   (Forts.)

(86) Internationale Anmeldenummer:
**PCT/EP2019/085256**

(87) Internationale Veröffentlichungsnummer:
**WO 2020/126984 (25.06.2020 Gazette 2020/26)**

(54) **POLYESTERZUSAMMENSETZUNGEN**

POLYESTER COMPOSITIONS

COMPOSITIONS DE POLYESTER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.12.2018   EP 18214363**

(43) Veröffentlichungstag der Anmeldung:
**27.10.2021   Patentblatt 2021/43**

(73) Patentinhaber: **Envalior Deutschland GmbH**
**40474 Düsseldorf (DE)**

(72) Erfinder:
• **BIENMÜLLER, Matthias**
**40474 DÜSSELDORF (DE)**
• **DÄHLING, Claudia**
**40474 DÜSSELDORF (DE)**
• **KOERTE, Leif, Arne**
**40474 DÜSSELDORF (DE)**

(74) Vertreter: **Envalior Association**
**Urmonderbaan 22**
**6167 RD Geleen (NL)**

(56) Entgegenhaltungen:
CN-A- 108 178 909      US-A- 5 718 971
US-A1- 2003 194 549

• **DATABASE CA [online] CHEMICAL ABSTRACTS SERVICE, COLUMBUS, OHIO, US; 19 June 2018 (2018-06-19), YIN, SHIYAO: "LED lamp shade composite material containing modified polyester for road lighting and its preparation method", XP002791892, retrieved from STN Database accession no. 2018:1142394**

**(Forts. nächste Seite)**

(52) Gemeinsame Patentklassifikation (CPC): (Forts.)

C-Sets
**C08K 3/34, C08L 67/00;**
**C08K 5/005, C08L 67/00;**
**C08K 5/10, C08L 67/00;**
**C08K 5/20, C08L 67/00;**
**C08K 5/524, C08L 67/00;**
**C08K 9/06, C08L 67/00**

C-Sets

## Beschreibung

Die vorliegende Erfindung betrifft ein Verfahren zur Reduzierung der Abrasivität Aluminiumoxid enthaltender Polyesterzusammensetzungen bzw. die Verwendung von mit wenigstens einem Aminosilan und/oder Epoxysilan oberflächenbehandeltem Aluminiumoxid in wärmeleitfähigen Polyesterzusammensetzungen zur Verringerung der Abrasion in Verarbeitungsmaschinen und Verarbeitungswerkzeugen und entsprechende Zusammensetzungen, daraus herzustellende Formmassen und darauf basierende Erzeugnisse.

## Stand der Technik

Dem Fachmann ist der Einsatz von Aluminiumoxid als Schleifmittel bekannt. Aluminiumoxid wird aus Bauxit gewonnen, indem dieser nach dem Bayer-Verfahren mit Natronlauge aufgeschlossen wird. Durch Entziehen des Wassers, zum Beispiel durch Brennen, Sintern oder Kalzinieren, erhält man das Aluminiumoxid. Man unterscheidet das kubische $\gamma$-$Al_2O_3$, sogenannte Tonerde die als Ausgangsstoff zur Keramik- und Aluminiumherstellung dient, und das rhomboedrische/trigonale $\alpha$-$Al_2O_3$, bekannt als Mineral Korund, Saphir oder bei Chromdotierung als Rubin.

Aufgrund seiner thermodynamischen Stabilität wird vorzugsweise $\alpha$-$Al_2O_3$ mit einer Dichte von 3,98, einer Mohshärte von 9 und einem Schmelzpunkt von 2053°C als Schleifmittel eingesetzt.

US 5 718 971 A beschreibt einen Polyesterfilm enthaltend mit einem Aminosilan oder Epoxysilan oberflächenbehandeltes Aluminiumoxid. US 2003 / 194549 A1 beschreibt eine Zusammensetzung aus Bindemittel und Aluminiumoxidteilchen, die mit Silanen vorbehandelt wurden, wobei Aminosilane und Epoxysilane eingeschlossen sind. Vorzugsweise wird alpha Aluminiumoxid eingesetzt. Als Bindemittel wird unter anderem Polyester beschrieben. CN 108 178 909 A offenbart modifizierte Polyester mit Nano-Aluminiumoxidteilchen, Kupplungsreagens und Flammschutzmittel. Unter anderem werden Aminosilane und Phosphitstabilisatoren aufgeführt.

In WO2010/025857A1 wird zur Herstellung von Schleifmitteln das dabei einzusetzende Aluminiumoxid mit organischem Silan oberflächenbehandelt und in eine Kunstharzmatrix eingebracht. In den Beispielen werden als Silane explizit 3-Aminopropyltriethoxysilan und 3-Methacryloxypropyltrimethoxysilan genannt.

Die Erhöhung der Wärmeleitfähigkeit Polyester basierter Formmassen und daraus herzustellender Erzeugnisse durch Zusatz von Aluminiumoxid ($Al_2O_3$) ist dem Fachmann aus WO2009/019186 A1 bekannt. Aufgrund seiner Mohshärte von 9 und dem dadurch bedingten hohen Verschleiß in Verarbeitungsmaschinen, insbesondere den Werkzeugen von Spritzgussmaschinen, hat sich Aluminiumoxid jedoch zur Herstellung wärmeleitfähiger Kunststoffzusammensetzungen bisher nicht durchgesetzt. Zusätzlich wurde gefunden, dass der Einsatz von Aluminiumoxid zu einer deutlichen Versprödung eines Compounds bzw. daraus herzustellender Erzeugnisse führt und zudem einen negativen Einfluss auf die Verformungsbeständigkeit bzw. Bruchdehnung sowie die Schlagzähigkeit Polyester basierter Erzeugnisse hat.

US 2003/194549 A1 beschreibt eine Zusammensetzung aus Bindemittel und Aluminiumoxidteilchen, welche mit Silanen vorbehandelt wurden.

CN 108178909 A offenbart einen modifizierten Polyester mit Nano-Aluminiumoxidteilchen, Kupplungsreagens und Flammschutzmittel.

Die Bruchdehnung ist ein Materialkennwert, der die bleibende Verlängerung einer Probe nach dem Bruch, bezogen auf die Anfangsmesslänge, angibt und stellt damit eine wesentliche Kenngröße zur Charakterisierung der Verformungsfähigkeit bzw. Duktilität eines Werkstoffes dar (siehe hierzu: **http://de.wikipedia.org/wiki/Bruchdehnung**). Gemessen wird die Bruchdehnung im Zugversuch nach ISO527 z.B. an spritzgegossenen Probekörpern. Die Schlagzähigkeit hingegen beschreibt die Fähigkeit eines Werkstoffes, Stoßenergie und Schlagenergie zu absorbieren ohne zu brechen. Die Schlagzähigkeit wird berechnet als das Verhältnis aus Schlagarbeit und Probenkörperquerschnitt (Maßeinheit: $kJ/m^2$). Durch verschiedene Arten des Schlagbiegeversuchs (Charpy, Izod) kann die Schlagzähigkeit bestimmt werden. Gemessen wird die Schlagzähigkeit nach ISO180-1U z.B. an spritzgegossenen Probekörpern. (siehe hierzu: **http://de.wikipedia.org/wiki/Schlagz%C3%A4higkeit**).

## Aufgabe der vorliegenden Erfindung

Aufgabe der vorliegenden Erfindung war deshalb die Bereitstellung wärmeleitfähiger sowie elektrisch isolierender und zu diesem Zweck Aluminiumoxid enthaltender Polyesterzusammensetzungen mit gegenüber der oben zitierten WO 2009/019186 A1 verbesserten mechanischen Eigenschaften und akzeptabler oder gegebenenfalls verbesserter Wärmeleitfähigkeit sowie verbessertem Abrasionsverhalten bei ansonsten vergleichbarer Zusammensetzung hinsichtlich weiterer Additive.

Das Verschleißverhalten von Verarbeitungsmaschinen, im folgenden "Abrasion" genannt, insbesondere in Extrudern und in Spritzgussmaschinen, wurde im Rahmen der vorliegenden Erfindung in Anlehnung an den Verschleißtest des Deutschen Kunststoffinstituts DKI Darmstadt (**Veröffentlichung FG Kunststoffe, "Neu- und Weiterentwicklung von Modellprüfverfahren für den korrosiv/abrasiven Verschleiß bei der Kunststoffverarbeitung",**

**Projekt-Nr. AiF 12245N (DKI 18/0-87), Laufzeit 01.12.1999 bis 28.02.2003)** nachgestellt.

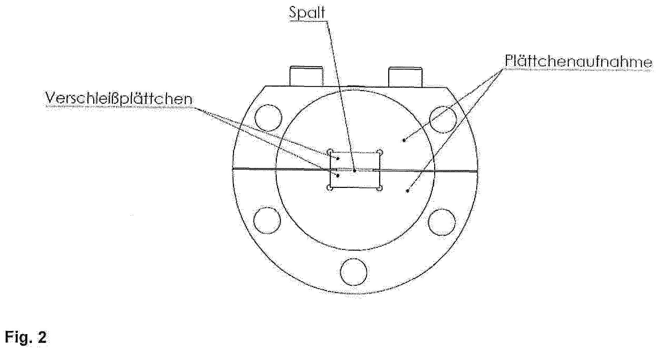

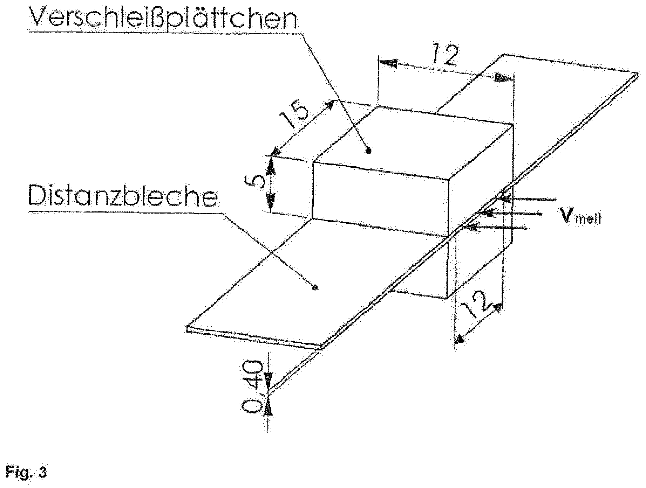

Ein geringer Verschleiß oder ein gutes Verschleißverhalten (=Abrasion) in Verarbeitungsmaschinen bzw. Verarbeitungswerkzeugen bedeutet im Rahmen der vorliegenden Erfindung, dass nur ein technisch vertretbarer Materialabtrag beim Spritzguss der zu untersuchenden Polyesterzusammensetzung von 100 Schuss (1 Schuss = 3D), mit einer Einspritzgeschwindigkeit $v$ von $v$ = 30 mm/s und einem Schneckendurchmesser D von D = 35 mm, bei einer Massetemperatur von 270°C durch eine Düse bestehend aus zwei Metallplättchen (Stahl: 1.2738) mit der Schlitzbreite $b$ = 12 mm, der Schlitzlänge I = 12 mm und der Schlitzhöhe $h$ = 0,4 mm zu beobachten ist. $\dot{V}$ beschreibt den Volumenstrom, der durch die Plättchen im Spritzprozess hindurch tritt. Ein Materialabtrag an dem im Rahmen der vorliegenden Erfindung verwendeten Stahl 1.2738 (Kurzname 40CrMnNiMo8-6-4 und lt. **Datenblatt Dörrenberg Edelstahl GmbH, Engelskirchen, aus 02/2017** mit der chemischen Zusammensetzung C = 0,4%, Mn = 1,5%, Cr = 1,9%, Ni = 1,0%, Mo = 0,2%) von unter 200 mg wird im Sinne der vorliegenden Erfindung als technisch vertretbar erachtet, um dem Anwender/Verarbeiter bei Verwendung eines geeignet gehärteten und ggf. oberflächenbeschichteten Stahls eine technische Verarbeitbarkeit Aluminiumoxid enthaltender Polyesterzusammensetzungen im Spritzgussprozess zu ermöglichen. **Fig.2** und **Fig.3** zeigen schematische Darstellungen der erfindungsgemäß zur Ermittlung der Abrasion eingesetzten Verschleißapparatur sowie der Plättchenanordnung und Geometrie der erfindungsgemäß verwendeten Messvorrichtung.

Kennt der Fachmann die Schusszahl, die Schussgeschwindigkeit und die Schussmenge (Schussmenge = Schneckenvorschub = 3D = 3 mal Schneckendurchmesser), kann er daraus ein V = Volumen

$$V = 3\,D\ \cdot \pi \cdot \left(\tfrac{D}{2}\right)^2$$

berechnen, womit die Menge, die durch den Metallschlitz gedrückt wurde, definiert ist. Die scheinbare Schergeschwindigkeit $\dot{\gamma}_{ap}$ kann der Fachmann mit der Formel

$$\dot{\gamma}_{ap} = \frac{6\ \cdot \dot{V}}{b\ \cdot h^2}$$

mit dem $\dot{V}$ = Volumenschmelzestrom

$$\dot{V} = v\ \cdot \pi \left(\tfrac{D}{2}\right)^2 ,$$

der Schlitzbreite $b$, der Schlitzhöhe $h$, dem Schneckendurchmesser D und der Einspritzgeschwindigkeit $v$ ebenfalls berechnen. Durch Differenzwägung der Metallplättchen vor und nach dem Versuch läßt sich der Materialabtrag ermitteln.

Gute mechanische Eigenschaften im Sinne der vorliegenden Erfindung bedeutet eine Bruchdehnung von wenigstens 1,5% gemessen nach ISO527 an spritzfrischen Probekörpern bei 150 Massenanteilen Aluminiumoxid bezogen auf 100 Massenanteile Polyester, wobei die Bruchdehnung der zuletzt aufgezeichnete Dehnungswert ist, bevor ein Spannungsabfall auf weniger als oder gleich 10 % des Festigkeitswerts erfolgt. Die Bruchdehnung wird als Größe der Dimension 1 oder in Prozent (%) angegeben. Bei Brüchen oberhalb der Streckgrenze wird die nominelle Bruchdehnung angegeben. Diese ist der letzte aufgezeichnete nominelle Dehnungswert, bevor ein Spannungsabfall auf weniger als oder gleich 10 % des Festigkeitswerts erfolgt. Die nominelle Dehnung wird anhand der Messwerte zwischen den Einspannklemmen bestimmt. Siehe:
https://de.wikipedia.org/wiki/Bruchdehnung?veaction=edit&section=6#Definition_2

Eine hohe Schlagzähigkeit im Sinne der vorliegenden Erfindung bedeutet eine Schlagzähigkeit von mindestens 18 kJ/m$^2$ gemessen nach ISO180-1U an spritzfrischen Probekörpern bei 150 Massenanteilen Aluminiumoxid bezogen auf 100 Massenanteile Polyester. Eine im Rahmen der vorliegenden Erfindung für ein erfindungsgemäßes Erzeugnis akzeptable Wärmeleitfähigkeit ist eine Wärmeleitfähigkeit gemessen nach ISO 22007-4 von mindestens 0,7 W/mK an spritzfrischen Probekörpern sowohl in, als auch senkrecht zur Fließrichtung des untersuchten Probekörpers bei 150 Massenanteilen Aluminiumoxid bezogen auf 100 Massenanteile Polyester.

Elektrisch isolierend im Sinne der vorliegenden Erfindung bedeutet, dass der Volumenwiderstand an spritzfrischen Probekörpern gemessen nach IEC60093 über 10$^9$ Ohm.m beträgt.

Überraschenderweise wurde gefunden, dass Polyesterzusammensetzungen sowie daraus herzustellende Erzeugnisse, deren Wärmeleitfähigkeit durch hohen Gehalt an Aluminiumoxid verbessert wird, bei der Spritzgießverarbeitung in Verarbeitungsmaschinen deutlich geringere Abrasion an den Werkzeugen unter Beibehaltung ihrer mechanischen Eigenschaften zeigen, wenn das Aluminiumoxid vor seiner Verarbeitung im Polyester zu einer Formmasse mit wenigstens einem Aminosilan und/oder Epoxysilan oberflächenbehandelt wird. Da dem Fachmann bekannt ist, dass die Abrasion vom Füllstoffgehalt eines Compounds abhängt, ist der erfinderische Effekt an Zusammensetzungen zu prüfen, die, abgesehen vom Aluminiumoxid, ansonsten dieselben Mengen an Additiven/Zusatzstoffen enthalten.

**Lösung der Aufgabe:**

Gegenstand der vorliegenden Erfindung ist ein Verfahren zur Reduzierung der Abrasivität wärmeleitfähiger, elektrisch isolierender Polyesterzusammensetzungen und daraus herzustellender Formmassen, dadurch gekennzeichnet, dass das einzusetzende Aluminiumoxid, dessen Oberfläche mit wenigstens einem Aminosilan und/oder Epoxysilan oberflächenbehandelt ist, mit einer Polyesterzusammensetzung in Kontakt gebracht wird.

Die Erfindung betrifft zudem die Verwendung von mit wenigstens einem Aminosilan und/oder Epoxysilan oberflächenbehandeltem Aluminiumoxid zur Reduzierung der Abrasion in Verarbeitungsmaschinen bei der Verarbeitung von Polyesterzusammensetzungen und darauf basierenden Polyesterformmassen. Im Rahmen der vorliegenden Erfindung wird als Referenz Aluminiumoxid ohne Oberflächenbehandlung betrachtet.

Die Erfindung betrifft aber auch Zusammensetzungen, daraus herzustellende Formmassen und darauf basierende Erzeugnisse enthaltend auf

a) 100 Massenanteile wenigstens eines Polyesters,

b) 70 bis 600 Massenanteile, vorzugsweise 125 bis 400 Massenanteile, besonders bevorzugt 150 bis 300 Massenanteile, mit wenigstens einem Aminosilan und/oder Epoxysilan oberflächenbehandeltem Aluminiumoxid ($Al_2O_3$), und

c) 0.017 bis 12.5 Massenanteile wenigstens eines Phosphitstabilisators.

In einer Ausführungsform enthalten erfindungsgemäße Zusammensetzungen und die daraus herzustellenden Formmassen sowie Erzeugnisse zusätzlich zu den Komponenten a), b) und c) wenigstens ein Entformungsmittel und/oder Nukleierungsmittel. Somit betrifft die vorliegende Erfindung Zusammensetzungen und daraus herzustellende Formmassen und darauf basierende Erzeugnisse, worin auf

a) 100 Massenanteile wenigstens eines Polyesters,

b) 70 bis 600 Massenanteile, vorzugsweise 125 bis 400 Massenanteile, besonders bevorzugt 150 bis 300 Massenanteile, mit wenigstens einem Aminosilan und/oder Epoxysilan oberflächenbehandeltem Aluminiumoxid ($Al_2O_3$),

c) 0.017 bis 12.5 Massenanteile wenigstens eines Phosphitstabilisators, und

d) 0.001 bis 10 Massenanteile wenigstens eines Entformungsmittels und/oder Nukleierungsmittels eingesetzt werden.

In einer Ausführungsform enthalten erfindungsgemäße Zusammensetzungen und die daraus herzustellenden Formmassen sowie Erzeugnisse wenigstens ein von den Komponenten b), c) und d) verschiedenes Additiv. Somit betrifft die vorliegende Erfindung Zusammensetzungen und daraus herzustellende Formmassen und darauf basierende Erzeugnisse, worin auf

a) 100 Massenanteile wenigstens eines Polyesters,
b) 70 bis 600 Massenanteile, vorzugsweise 125 bis 400 Massenanteile, besonders bevorzugt 150 bis 300 Massenanteile, mit wenigstens einem Aminosilan und/oder Epoxysilan oberflächenbehandeltem Aluminiumoxid,
c) 0.017 bis 12.5 Massenanteile wenigstens eines Phosphitstabilisators,
d) 0.001 bis 10 Massenanteile wenigstens eines Entformungsmittels und/oder Nukleierungsmittels, und
e) 0.001 bis 150 Massenanteile wenigstens eines von den Komponenten b), c) und d) verschiedenen Additivs eingesetzt werden.

In einer Ausführungsform betrifft die vorliegende Erfindung Zusammensetzungen und daraus herzustellende Formmassen und darauf basierende Erzeugnisse, worin auf

a) 100 Massenanteile wenigstens eines Polyesters,
b) 70 bis 600 Massenanteile, vorzugsweise 125 bis 400 Massenanteile, besonders bevorzugt 150 bis 300 Massenanteile, mit wenigstens einem Aminosilan und/oder Epoxysilan oberflächenbehandeltem Aluminiumoxid,

c) 0.017 bis 12.5 Massenanteile wenigstens eines Phosphitstabilisators,

d) 0.001 bis 10 Massenanteile Talkum und/oder wenigstens eines Entformungsmittels, und

e) 0.001 bis 150 Massenanteile wenigstens eines weiteren, von den Komponenten b), c) und d) verschiedenen Additivs eingesetzt werden.

Vorzugsweise weist eine erfindungsgemäße Zusammensetzung bzw. daraus herzustellende Formmassen und darauf basierende Erzeugnisse eine nach ISO 22007-4 zu bestimmende Wärmeleitfähigkeit im Bereich von 0,4 bis 10 W/m.K, besonders bevorzugt im Bereich von 0,.8 bis 8 W/m.K, ganz besonders bevorzugt im Bereich von 1 bis 6 W/m.K, auf, sowohl in als auch senkrecht zur Fließrichtung des zu untersuchenden Probekörpers.

Die Zubereitung der erfindungsgemäßen Zusammensetzungen für eine weitere Nutzung erfolgt durch Mischen der als Edukte einzusetzenden Komponenten a) und b), sowie gegebenenfalls der weiteren Komponenten c) bis e) in wenigstens einem Mischwerkzeug. Hierdurch werden als Zwischenprodukte, auf den erfindungsgemäßen Zusammensetzungen basierende, Formmassen erhalten. Diese Formmassen können entweder ausschließlich aus den genannten Komponenten bestehen, oder aber zusätzlich zu den genannten Komponenten noch weitere Komponenten enthalten.

"Alkyl" bezeichnet im Rahmen der vorliegenden Erfindung eine geradkettige oder verzweigte gesättigte Kohlenwasserstoffgruppe. Wird beispielsweise eine Alkylgruppe mit 1 bis 4 Kohlenstoffatomen eingesetzt, kann diese als eine "Niederalkylgruppe" bezeichnet werden und vorzugsweise Methyl (Me), Ethyl (Et), Propyl, insbesondere n-Propyl und isoPropyl, Butyl, insbesondere n-Butyl, iso-Butyl, sec-Butyl, tert.-Butyl, umfassen.

"Cycloalkyl" leitet sich von Cycloalkanen ab, die eine Stoffgruppe von ringförmigen, gesättigten Kohlenwasserstoffen darstellen. Die Ringe können Seitenketten tragen. In der Systematik der organischen Chemie zählt man sie zu den alicyclischen Verbindungen. Die Cycloalkane ohne Seitenketten bilden eine homologe Reihe mit der allgemeinen Summenformel $C_nH_{2n}$, wobei $n \geq 3$ ist. Somit ist das kleinste vorkommende Cycloalkan das Cyclopropan. Entsprechend lautet die Summenformel für einen unsubstituierten Cycloalkylrest ohne Seitenkette $C_nH_{2n-1}$.

Zur Klarstellung sei angemerkt, dass vom Rahmen dieser Erfindung alle aufgeführten, allgemeinen oder in Vorzugsbereichen genannten Definitionen und Parameter in beliebigen Kombinationen umfasst sind. Dies betrifft ausdrücklich auch die Kombinationen der im Rahmen der vorliegenden Erfindung beschriebenen Verfahren und Verwendungen mit den Massenanteilen der Komponenten wie sie für die Zusammensetzungen und daraus herzustellenden Formmassen und darauf basierenden Erzeugnisse angegeben werden.

Sofern nicht anders angegeben gelten zitierte Normen in der zum Anmeldetag gültigen Fassung. Sofern nicht anders angegeben handelt es sich bei Prozentangaben um Gewichtsprozente.

**Bevorzugte Ausführungsformen der Erfindung**

**Komponente a)**

Vorzugsweise handelt es sich bei den erfindungsgemäß einzusetzenden Polyestern um Polyalkylenterephthalate (PAT). Bevorzugte Polyalkylenterephthalate werden ausgewählt aus der Gruppe Polyethylenterephthalat (PET), Polytrimethylenterephthalat (PTT), Polybutylenterephthalat (PBT), Polypentamethylenterephthalat (PPT), Polyhexamethylenterephthalat (PHT) und Polyoctamethylenterephthalat (POT).

Erfindungsgemäß ist Komponente a) wenigstens ein Polyalkylenterephthalat, bevorzugt wenigstens Polybutylenterephthalat (PBT), Polyethylenterephthalat (PET) oder ein Blend aus PBT und PET, insbesondere Blends aus PBT und PET worin der PET Anteil bezogen auf die Summe aller enthaltenen Polyester im Bereich von 50 bis 99,9 Gew-% liegt.

Erfindungsgemäß bevorzugt ist Komponente a) Polybutylenterephthalat (PBT) oder Polyethylenterephthalat (PET) oder ein Blend aus PBT und PET, insbesondere Blends aus PBT und PET worin der PET Anteil bezogen auf die Summe aller enthaltenen Polyester im Bereich von 50 bis 99,9 Gew-% liegt.

Die erfindungsgemäß bevorzugt einzusetzenden Polyalkylenterephthalate PBT bzw. PET sind Reaktionsprodukte aus aromatischen Dicarbonsäuren oder ihrer reaktionsfähigen Derivate, bevorzugt Dimethylestern oder Anhydriden, und den entsprechenden aliphatischen Diolen. Sie lassen sich aus Terephthalsäure (oder ihren reaktionsfähigen Derivaten) und den jeweiligen aliphatischen Diolen mit 4 bzw. 2 C-Atomen nach bekannten Methoden herstellen (**Kunststoff-Handbuch, Bd. VIII, S. 695 - 743, Karl-Hanser-Verlag, München 1973).**

Bevorzugt als Polyester einzusetzendes PET enthält mindestens 80 Mol-%, vorzugsweise mindestens 90 Mol-%, bezogen auf die Dicarbonsäure, Terephthalsäurereste und mindestens 80 Mol-%, vorzugsweise mindestens 90 Mol-%, bezogen auf die Diolkomponente, Ethylenglykolreste.

Bevorzugt als Polyester einzusetzendes PBT enthält mindestens 80 Mol-%, vorzugsweise mindestens 90 Mol-%, bezogen auf die Dicarbonsäure, Terephthalsäurereste und mindestens 80 Mol-%, vorzugsweise mindestens 90 Mol-%, bezogen auf die Diolkomponente, Butandiol-1,4-reste.

Die bevorzugt einzusetzenden Polyester PBT und PET können neben Ethylen- bzw. Butandiol-1,4-resten bis zu 20 Mol-% andere aliphatische Diole mit 3 bis 12 C-Atomen oder cycloaliphatische Diole mit 6 bis 21 C-Atomen enthalten. Bevorzugt sind Reste von Propandiol-1,3, 2-Ethylpropandiol-1,3, Neopentylglykol, Pentandiol-1,5, Hexandiol-1.6, 3-Methylpentandiol-2,4, 2-Methylpentandiol-2,4, 2,2,4-Trimethylpentandiol-1,3, 1,6,2-Ethyl-1,3-hexandiol, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-Bis-(3-ß-hydroxyethoxyphenyl)-propan oder 2,2-Bis-(4-hydroxypropoxyphenyl)-propan (DE-A 24 07 674 DE-A 24 07 776, DE-A 27 15 932**).

In einer Ausführungsfom können die bevorzugt einzusetzenden Polyester durch Einbau relativ kleiner Mengen 3- oder 4-wertiger Alkohole oder 3- oder 4-basischer Carbonsäuren, wie sie z.B. in der DE-A 19 00 270 beschrieben sind, verzweigt werden. Bevorzugte Verzweigungsmittel sind Trimesinsäure, Trimellitsäure, Trimethylolethan und Trimethylolpropan und Pentaerythrit.

Zur Charakterisierung des mittleren Molekulargewichts von als Komponente a) einzusetzendem Polyester wird vielfach die Lösungsviskosität, auch intrinsische- oder Grenzviskosität (SV oder IV) genannt, verwendet. Die erfindungsgemäß bevorzugt einzusetzenden Polyester weisen bevorzugt eine intrinsische Viskosität im Bereich von 30 cm$^3$/g bis 150 cm$^3$/g auf, besonders bevorzugt im Bereich von 40 cm$^3$/g bis 130 cm$^3$/g, insbesondere bevorzugt im Bereich von 50 cm$^3$/g bis 110 cm$^3$/g, jeweils gemessen in Phenol/o-Dichlorbenzol (1:1 Gew.-Teile) bei 25°C mittels eines Ubbelohde Viskosimeters nach ISO 1628 (siehe: **Visko Fibel, SI Analytics GmbH/Xylem Inc. 11/2015**).

Die intrinsische Viskosität [η] wird auch Grenzviskositätszahl oder Staudinger Index genannt, da sie erstens eine Stoffkonstante ist und zweitens in einem Zusammenhang mit dem Molekulargewicht steht. Sie gibt an, wie die Viskosität des Lösungsmittels durch den gelösten Stoff beeinflusst wird. Zur Bestimmung der intrinsischen Viskosität wird die folgende Definition verwendet:

$$[\eta] = \lim_{c \to 0} \frac{\eta_{sp}}{c} = \lim_{c \to 0} \frac{1}{c} \ln\left(\frac{\eta}{\eta_0}\right)$$

wobei c die Konzentration des gelösten Stoffs in g/ml, $\eta_0$ die Viskosität des reinen Lösungsmittels und $\eta_{sp} = \eta/\eta_0 -1$ die spezifische Viskosität ist.

Wird ein Blend aus PET und PBT eingesetzt, so wird ein Blend bevorzugt, worin der PET Anteil bezogen auf die Summe aller in Komponente a) enthaltenen Polyester im Bereich von 50 bis 99,9 Gew-% liegt.

**Komponente b)**

Vorzugsweise wird als Komponente b) ein mit wenigstens einem Aminosilan und/oder weingstens einem Epoxysilan oberflächenbehandeltes α-Al$_2$O$_3$ eingesetzt.

Besonders bevorzugt wird für die Komponente b) Al$_2$O$_3$ [CAS 1344-28-1] mit einer nach ISO 13320 mittels Laserbeugung zu bestimmenden monomodalen, volumenmittleren Partikelgrößenverteilung eingesetzt. Die Auswertung der mittels Laserbeugung erhaltenen Daten erfolgt über ein volumenbezogenes Histogramm mit logarithmischer Abszisse. Dazu werden die Partielgrößen in Größenklassen unterteilt. Jede Dekade wird über einen Messbereich von 0,01 μm bis 10000 μm in 18 Größenklassen unterteilt. Somit entstehen 108 Größenklassen, deren Breite der Größenklasse y der Formel

$$y = 0,01 \cdot e^{\frac{\ln(10) \cdot x}{18}} - 0,01 \cdot e^{\frac{\ln(10) \cdot (x-1)}{18}}$$

entspricht, wobei x die fortlaufende Zahl der Größenklassen im Bereich von 1 bis 108 beschreibt.

Zur Definition des Begriffs "monomodal" sei verwiesen auf:
**https://de.wikipedia.org/wiki/Partikelgr%C3%B6%C3%9Fenverteilung**

Erfindungsgemäß liegt eine monomodale Partikelgrößenverteilung dann vor, wenn die Auftragung des Volumens der Aluminiumoxid-Partikelgrößen in [%] (= Y-Achse im Histogramm) gegen die Größenklasse in micrometer [μm] (= X-Achse im Histogramm) vorzugsweise nur ein Maximum in Form einer Gauß'schen Kurve bildet und gegebenenfalls auftretende weitere Maxima ein Volumen von 1% nicht überschreiten. Besonders bevorzugt liegt das eine zu betrachtende Maximum der Gauß'schen Kurve im Histogramm im Bereich von 0,1 bis 15 μm, ganz besonders bevorzugt im Bereich von 0,1 bis 10 μm.

Ein im Rahmen der vorliegenden Erfindung eingesetztes Aluminiumoxidpulver mit einer nach ISO 13320 mittels Laserbeugung zu bestimmenden monomodalen, volumenmittleren Partikelgrößenverteilung ist CT 3000 SG der Fa. Almatis GmbH mit einem d50-Wert von 0,5 μm und einer BET-Oberfläche von 7,8 m$^2$/g.

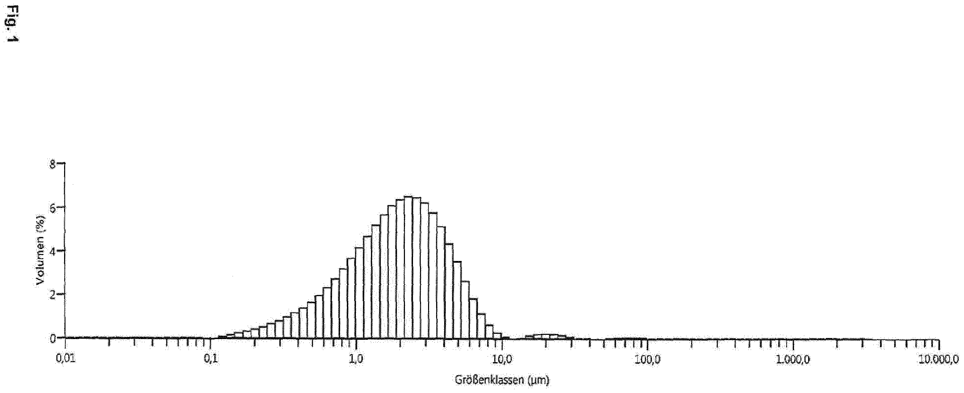

**Fig. 1** zeigt ein Histogramm mit der monomodalen durch Laserbeugung nach ISO 13320 ermittelten Partikelgrößenverteilung eines weiteren im Rahmen der vorliegenden Erfindung eingesetzten oberflächenbehandelten Aluminiumoxids, wozu 3-Aminopropyltrimethoxysilan verwendet wurde. Genauso kann aber auch 3-Aminopropyltriethoxysilan verwendet werden. Im Histogramm der **Fig. 1** sind die Größenklassen in $\mu$m (X-Achse) gegen das Volumen in % aufgetragen. Der d10 liegt darin bei 0,582 $\mu$m, der d50 bei 1,95 $\mu$m und der d90 bei 4,79 $\mu$m. Monomodale Aluminiumoxide werden auch von Nabaltec AG, Schwandorf, unter dem Markennamen Nabalox® vertrieben.

Der Begriff der "Partikelgrößenverteilung" ist der Statistik entlehnt. Dort werden Häufigkeiten und Häufigkeitsverteilungen eines beliebigen Merkmals, z.B. Fertigungstoleranzen, betrachtet. Im Bereich der Partikeltechnologie und der Partikelmesstechnik bzw. der Dispersitätsanalyse wird als Merkmal der Äquivalentdurchmesser eines Partikels gewählt. Aus der allgemeinen Häufigkeitsverteilung der Statistik wird somit die Partikelgrößenverteilung, die häufig auch als Korngrößenverteilung bezeichnet wird. Die Dichteverteilung von Partikelgrößen zeigt zumeist die Form einer Gaußschen Glockenkurve. Weist die Dichteverteilung von Partikelgrößen lediglich ein Maximum auf, so spricht man von einer monomodalen Verteilung. Bei zwei Maxima ist die Verteilung bimodal. Der Abszissenwert des größten Maximums wird als Modalwert bezeichnet. Die Partikelgrößenverteilung wird mittels Laserbeugung nach ISO13320 ermittelt. Für die Messung wurden im Rahmen der vorliegenden Erfindung die optischen Stoffdaten für Aluminiumoxid verwendet und nach der Mie-Theorie ausgewertet. siehe hierzu: **https://de.wikipedia.org/wiki/Laserbeugungs-Partikelgr%C3%B6%C3%9Fenanalyse.** d10, d50 und d90 sind diejenigen Durchmesser bei denen 10 %, 50% (Median) bzw. 90% der Partikel bezogen auf das Gesamtvolumen einen kleineren Durchmesser haben.

Bei dem im Rahmen der vorliegenden Erfindung vorzugsweise einzusetzendem technischen Aluminiumoxid liegt der Anteil an $\alpha$-$Al_2O_3$ bei mehr als 70%. Besonders bevorzugt handelt es sich um ein Aluminiumoxid mit einem Anteil an $\alpha$-$Al_2O_3$ von über 90%. Ganz besonders bevorzugt handelt es sich um ein Aluminiumoxid mit einem Anteil an $\alpha$-$Al_2O_3$ von über 95%. Erfindungsgemäß besonders bevorzugt ist $\alpha$-$Al_2O_3$ mit weniger als 5 Gew.-% Verunreinigungen, ganz besonders bevorzugt mit weniger als 1 Gew.-% Verunreinigungen.

Bevorzugt wird für Komponente b) ein oberflächenbehandeltes Aluminiumoxid in Pulverform eingesetzt. Bevorzugte Pulver weisen eine mittels Laserbeugung gemäß ISO13320 zu bestimmende volumenmittlere Partikelgröße d50 von maximal 100 $\mu$m, bevorzugt eine volumenmittlere Partikelgröße d50 im Bereich von 0,1 bis 50 $\mu$m, besonders bevorzugt eine volumenmittlere Partikelgröße d50 im Bereich von 0,5 bis 10 $\mu$m, ganz besonders bevorzugt eine volumenmittlere Partikelgröße d50 im Bereich von 0,5 bis 5 $\mu$m auf.

Die nach ISO13320 mittels Laserbeugung zu bestimmende Partikelgröße d10 liegt für Komponente b) vorzugsweise im Bereich von 0,01 bis 20 $\mu$m, besonders bevorzugt bei 0,05 bis 10 $\mu$m, ganz besonders bevorzugt im Bereich von 0,1 bis 5 $\mu$m und insbesondere bevorzugt im Bereich zwischen 0,.5 und 2$\mu$m.

Die nach ISO13320 mittels Laserbeugung zu bestimmende Partikelgröße d90 liegt für Komponente b) vorzugsweise bei maximal 200$\mu$m, besonders bevorzugt im Bereich von 1 bis 100 $\mu$m, ganz besonders bevorzugt im Bereich von 1,5 bis 50 $\mu$m, insbesondere bevorzugt im Bereich von 2 bis 10 $\mu$m.

Vorzugsweise wird für die Komponente b) ein Aluminiumoxid mit einer nach ISO 13320 mittels Laserbeugung zu bestimmenden volumenmittleren Partikelgrößenverteilung mit einem d50 von maximal 100 $\mu$m, einem d10 im Bereich von 0,01 bis 20 $\mu$m und einem d90 bei maximal 200$\mu$m eingesetzt. Die Erfindung betrifft deshalb vorzugsweise Zusammensetzungen und daraus herzustellende Formmassen und Erzeugnisse, mit der Maßgabe, dass als Komponente b) ein Aluminiumoxid mit einer nach ISO 13320 mittels Laserbeugung zu bestimmenden volumenmittleren Partikelgrößenverteilung mit einem d50 von maximal 100 $\mu$m, einem d10 im Bereich von 0,01 bis 20 $\mu$m und einem d90 bei maximal 200 $\mu$m eingesetzt wird.

Besonders bevorzugt wird für die Komponente b) ein Aluminiumoxid mit einer nach ISO 13320 mittels Laserbeugung zu bestimmenden monomodalen, volumenmittleren Partikelgrößenverteilung mit einem d50 von maximal 100 $\mu$m, einem d10 im Bereich von 0,01 bis 20 $\mu$m und einem d90 im Bereich von 1 bis 100 $\mu$m eingesetzt. Die Erfindung betrifft deshalb besonders bevorzugt Zusammensetzungen und daraus herzustellende Formmassen und Erzeugnisse, mit der Maßgabe, dass als Komponente b) ein Aluminiumoxid mit einer nach ISO 13320 mittels Laserbeugung zu bestimmenden monomodalen volumenmittleren Partikelgrößenverteilung mit einem d50 von maximal 100 $\mu$m, einem d10 im Bereich von 0,01 bis 20 $\mu$m und einem d90 im Bereich von 1 bis 100 $\mu$m eingesetzt wird.

Ganz besonders bevorzugt wird für die Komponente b) ein Aluminiumoxid mit einer nach ISO 13320 mittels Laserbeugung zu bestimmenden monomodalen, volumenmittleren Partikelgrößenverteilung mit einem d50 im Bereich von 0,1 bis 50 $\mu$m, einem d10 im Bereich von 0,01 bis 20 $\mu$m und einem d90 im Bereich von 1 bis 100 $\mu$m eingesetzt. Die Erfindung betrifft deshalb ganz besonders bevorzugt Zusammensetzungen und daraus herzustellende Formmassen und Erzeugnisse, mit der Maßgabe, dass als Komponente b) ein Aluminiumoxid mit einer nach ISO 13320 mittels Laserbeugung zu bestimmenden monomodalen volumenmittleren Partikelgrößenverteilung mit einem d50 im Bereich von 0,1 bis 50 $\mu$m, einem d10 im Bereich von 0,01 bis 20 $\mu$m und einem d90 im Bereich von 1 bis 100 $\mu$m eingesetzt wird.

Insbesondere ganz besonders bevorzugt wird für die Komponente b) ein Aluminiumoxid mit einer nach ISO 13320 mittels Laserbeugung zu bestimmenden monomodalen, volumenmittleren Partikelgrößenverteilung mit einem d50 im Bereich von 0,5 bis 5 $\mu$m, einem d10 im Bereich von 0,5 bis 2 $\mu$m und einem d90 im Bereich von 2 bis 10 $\mu$m

eingesetzt. Die Erfindung betrifft deshalb insbesondere ganz besonders bevorzugt Zusammensetzungen und daraus herzustellende Formmassen und Erzeugnisse, mit der Maßgabe, dass als Komponente b) ein Aluminiumoxid mit einer nach ISO 13320 mittels Laserbeugung zu bestimmenden monomodalen volumenmittleren Partikelgrößenverteilung mit einem d50 im Bereich von 0,5 bis 5 $\mu$m, einem d10 im Bereich von 0,5 bis 2 $\mu$m und einem d90 im Bereich von 2 bis 10 $\mu$m eingesetzt wird.

Die erfindungsgemäß für die Komponente b) zu verwendenden $Al_2O_3$ Partikel, können in unterschiedlichen Formen vorliegen, die durch das Aspektverhältnis beschrieben werden können. Bevorzugt werden Partikel mit einem Aspektverhältnis von 1 bis 100, besonders bevorzugt 1 bis 30, ganz besonders bevorzugt 1 bis 10 eingesetzt. In EP 3 164 694 A1 werden einige Verfahren zur Bestimmung des Aspektverhältnisses beschrieben. Bei kamerabasierten Verfahren werden die Partikel als zweidimensionale Bilder auf den Sensor der Kamera abgebildet. Ist der Sensor eine CCD-Matrix oder ein CMOS-Bildsensor wird eine entsprechende Bildauswertesoftware zur Partikelformbestimmung verwendet. In DE 198 02 141 C1 ist eine Lösung mit Matrixkamera und in EP 1 972 921 A1 ist eine Lösung mit zwei Kameras beschrieben. Ist der Sensor eine CCD-Zeile, wird die abgebildete Partikelfläche aus den gemessenen Sehnenlängen bei bekannter Partikelgeschwindigkeit zusammengesetzt. Entsprechende Vorrichtungen und Verfahren sind in DE 10 2009 056 503 A1 (mit Sensorzeile), DE 10 2004 056 520 A1 (mit CCD-Zeile), DE 43 13 688 A1 (mit CCD- Zeile), DE 41 19 240 C2 (mit CCD-Zeile), DD 278 859 A1 (mit CCD-Liniensensor), DD 260 764 A1 (mit CCD-Zeilensensor) und DD 232760 A1 (mit einzeiliger Fernsehkamera) aufgeführt. DE 196 28 348 C1 schlägt eine Bestimmung der Partikelform mit einer Zeile aus einzelnen Lichtwellenleitern vor, wobei eine zweite Lichtwellenleiterzeile zur Ermittlung der Geschwindigkeit eingesetzt wird. Beugungsbasierte Verfahren nutzen die Abhängigkeit des Partikelbeugungsbildes von der Partikelform. Dabei werden die Partikel mit kohärentem Licht bestrahlt und die Lichtintensitätsverteilung des Beugungsbildes mit einem geeigneten Empfänger gemessen. Die Verteilung der Lichtintensität im Beugungsbild hängt von der Form der Partikel ab. Lösungen hierfür enthalten DE 694 06 683 T2 (mit Ringsensor) und DE 102 18 413 B4. Die Druckschrift DE 41 29105 A1 offenbart eine Bestimmung der Partikelform mit Hilfe einer Streulichtmessung. Da sich die genannten Verfahren lediglich vom Aufwand her unterscheiden, kann der Fachmann aus diesen im Stand der Technik genannten Verfahren frei wählen.

Erfindungsgemäß für die Komponente b) einzusetzendes $Al_2O_3$ ist mit wenigstens einer Oberflächenmodifizierung auf Basis wenigstens eines Aminosilans und/oder Epoxysilans, vorzugsweise Epoxysilans, versehen. Als Oberflächenmodifizierung werden silanbasierte organische Kopplungsmittel bezeichnet, welche die Anbindung an die thermoplastische Matrix verbessern sollen.

Bevorzugt wird für die Oberflächenbehandlung bzw. Oberflächenmodifizierung des Aluminiumoxids wenigstens ein Aminosilan mit der allgemeinen Summenformel

$$(RO)_3\text{-}Si\text{-}(CH_2)_n\text{-}X$$

eingesetzt, worin

R  für einen organischen Rest ausgewählt aus der Gruppe Methyl, Ethyl, i-Propyl und Methoxymethyl steht,
n  für eine ganze Zahl von 0 bis 12 (Endwerte eingeschlossen) steht, und
X  für für einen Rest $NR^1R^2$ steht und
$R^1$ und $R^2$  jeweils unabhängig voneinenader für Wasserstoff, für einen $C_1$-$C_6$-Alkylrest oder für einen $C_5$-$C_9$-Cycloalkylrest stehen.

Ein bevorzugt für die Oberflächenbehandlung bzw. Oberflächenmodifizierung des Aluminiumoxids einzusetzendes Aminosilan wird ausgewählt aus der Gruppe 3-Aminopropyltriethoxysilan [CAS 919-30-2], 3-Aminopropyltrimethoxysilan [CAS 13822-56-5], N-(2-aminoethyl)-3-aminopropyltrimethoxysilan [CAS 1760-24-3], N-(2-aminoethyl)-3-aminopropyltriethoxysilan [CAS 5089-72-5], 3-(N-cyclohexylamino)propyltrimethoxysilan [CAS 3068-78-8], und N,N-(Diethylaminomethyl)triethoxysilan [CAS 15180-47-9].

Bevorzugt wird für die Oberflächenbehandlung bzw. Oberflächenmodifizierung des Aluminiumoxids wenigstens ein Epoxysilan mit der allgemeinen Summenformel

$$E\text{-}R^3\text{-}Si(R^4)_a\text{-}(OR^5)_{3\text{-}a}$$

eingesetzt, worin E für eine Glycidylgruppe, eine Glycidyloxygruppe oder eine Epoxycyclohexylgruppe oder für ein Gemisch dieser steht, $R^3$ für eine $C_1$-$C_4$-Alkylengruppe steht, $R^4$ und $R^5$ jeweils unabhängig voneinander für $C_1$-$C_4$-Alkylgruppen stehen und a für 0, 1 oder 2 steht.

Besonders bevorzugt wird wenigstens ein Epoxysilan ausgewählt aus der Gruppe

2-(3,4-Epoxycyclohexyl) ethyltrimethoxysilan [CAS 3388-04-3],

(3-Glycidoxypropyl)trimethoxysilan [CAS 2530-83-8],
(3-Glycidoxypropyl)methyldiethoxysilan [CAS 2897-60-1],
5,6-Epoxyhexyltriethoxysilan [CAS 86138-01-4],
2-(3,4-Epoxycyclohexyl)ethylmethyldiethoxysilan [CAS 3388-04-3],
(3-Glycidoxypropyl)triethoxysilan [CAS 2602-34-8],
2-(3,4-Epoxycyclohexyl)ethyltriethoxysilan [CAS 10217-34-2] und
(3-Glycidoxypropyl)methyldimethoxysilan [CAS 65799-47-5].

Erfindungsgemäß Silan basierte Oberflächenmodifizierungen und deren Herstellung sind dem Fachmann prinzipiell aus US 7,547,743 B2 oder DE 69317121 T2 bekannt, deren Inhalte bezüglich der darin offenbarten Herstellung von erfindungsgemäß einzusetzenden Silanen von der vorliegenden Anmeldung vollumfänglich umfasst wird.

Vorzugsweise wird das für die Oberflächenbehandlung einzusetzende Amino- bzw. Epoxysilan in Mengen im Bereich von 0,05 bis 5 Massenanteilen, besonders bevorzugt in Mengen im Bereich von 0,1 bis 1 Massenanteilen, bezogen auf 100 Massenanteile Aluminiumoxid, aufgetragen.

Die Oberflächenbehandlung bzw. Oberflächenmodifizierung des Aluminiumoxids mit Aminosilan und/oder Epoxysilan kann unmittelbar vor dem Einsatz des Aluminiumoxids erfolgen, oder es kann bereits zuvor oberflächenbehandeltes Aluminiumoxid eingesetzt werden. Die zum Einsatz kommenden Silane reagieren beim Kontakt mit dem Aluminiumoxid zu Silanolen, der jeweilige Alkoholrest wird abgespalten. Das im Zusammenhang mit **Fig.1** diskutierte 3-Aminopropyltrimethoxysilan und das 3-Aminopropyltriethoxysilan werden bei Kontakt mit dem Aluminiumoxid beide zu 3-Aminopropylsilanol umgewandelt, der Alkoholrest wird abgespalten. Entsprechendes gilt für die alternativ einzusetzenden Epoxysilane.

Der Auftrag des Aminosilans auf das Aluminiumoxid erfolgt erfindungsgemäß in der in WO 2009/156342 A1 beschriebenen Weise, indem zunächst das Aminosilan zur Silanolbildung in VE-Wasser (VE = vollentsalztes Wasser) vorgelegt und bei einer Temperatur im Bereich von 23 bis 27 °C (Zimmertemperatur) gerührt wird. Die Einsatzmengen orientieren sich an den oben genannten Massenanteilen. Anschließend gibt man das Aluminiumoxid hinzu, rührt die Suspension bei Temperaturen im Bereich von 75 bis 100 °C, saugt das oberflächenbehandelte Aluminiumoxid ab und wäscht mit VE-Wasser. Anschließend wird bei Temperaturen von etwa 120 °C getrocknet und bei 200 °C getempert. Eine technische Methode zur Oberflächenbehandlung von Aluminiumoxid mit Silanen wird in EP 1 628 916 B1 beschrieben, deren Inhalt von der vorliegenden Anmeldung vollumfänglich umfasst wird. Dabei wird pyrogen hergestelltes Aluminiumoxid bei Raumtemperatur mit dem Oberflächenmodifizierungsmittel besprüht und das Gemisch anschließend thermisch bei einer Temperatur von 50 bis 400 °C über einen Zeitraum von 1 bis 6 Stunden behandelt, oder das pyrogene Aluminiumoxid mit dem Oberflächenmodifizierungsmittel in Dampfform behandelt und die Mischung anschließend thermisch bei einer Temperatur im Bereich von 50 bis 800 °C und über einen Zeitraum von 0,5 bis 6 h ausgesetzt, wobei die thermische Behandlung unter Schutzgas, wie zum Beispiel Stickstoff, erfolgen kann. Die Oberflächenbehandlung gemäß EP 1 628 916 B1 kann in beheizbaren Mischern und Trocknern mit Sprühvorrichtungen kontinuierlich oder diskontinuierlich durchgeführt werden. Geeignete Vorrichtungen sind beispielsweise Pflugscharmischer oder Platten-, Zyklon- oder Wirbelschichttrockner.

**Komponente c)**

Erfindungsgemäß wird als Komponente c) wenigstens ein Phosphitstabilisator eingesetzt. Bevorzugt wird wenigstens ein Phosphitstabilisator der Reihe Tris(2,4-ditert-butylphenyl)phosphit (Irgafos® 168, BASF SE, [CAS 31570-04-4]), Bis(2,4-di-tert-butylphenyl)pentaerythritol-diphosphit (Ultranox® 626, Chemtura, [CAS 26741-53-7]), Bis(2,6-di-ter-butyl-4-methylphenyl)pentaerythritol-diphosphit (ADK Stab PEP-36, Adeka, [CAS 80693-00-1]), Bis(2,4-dicumylphenyl)pentaerythritol-diphosphit (Doverphos® S-9228, Dover Chemical Corporation, [CAS 154862-43-8]), Tris(nonylphenyl)phosphit (Irgafos® TNPP, BASF SE, [CAS 26523-78-4]), (2,4,6-tri-t-butylphenol)2-butyl-2-ethyl-1,3-propan-ediol-phosphit (Ultranox® 641, Chemtura, [CAS 161717-32-4]), Hostanox® P-EPQ [CAS 119345-01-6] oder polymere Phosphorigsäureester gemäß EP 1 523 520 B1 - bevorzugt polymere Phosphorigsäureester, die Oxetangruppen enthalten und von denen 50% oder mehr aller Moleküle mindestens vier Monomere aus der Gruppe eines zwei- oder mehrwertigen Phenols und/oder Ester der phosphorigen Säure enthalten - eingesetzt.

Erfindungsgemäß bevorzugt sind Zusammensetzungen, daraus herzustellende Formmassen und darauf basierende Erzeugnisse enthaltend auf

a) 100 Massenanteile wenigstens eines Polyesters,

b) 70 bis 600 Massenanteile, vorzugsweise 125 bis 400 Massenanteile, besonders bevorzugt 150 bis 300 Massenanteile, mit wenigstens einem Aminosilan und/oder Epoxysilan oberflächenbehandeltes $Al_2O_3$, und

c) 0,017 bis 12,5 Massenanteile wenigstens eines Phosphitstabilisators aus der Gruppe Tris(2,4-ditert-butylphenyl)phosphit, Bis(2,4-di-tert-butylphenyl)pentaerythritol-diphosphit, Bis(2,6-di-ter-butyl-4-methylphenyl)pentaerythritol-diphosphit, Bis(2,4-dicumylphenyl)pentaerythritol-diphosphit, Tris(nonylphenyl)phosphit, (2,4,6-tri-t-butylphenol)2-butyl-2-ethyl-1,3-propanediol-phosphit, Tetrakis(2,4-di-tert-butylphenyl)-1,1-biphenyl-4,4'-diylbisphosphonit und polymere Phosphorigsäureester, die Oxetangruppen enthalten und von denen 50% oder mehr aller Moleküle mindestens vier Monomere aus der Gruppe eines zwei- oder mehrwertigen Phenols und/oder Ester der phosphorigen Säure enthalten.

Insbesondere bevorzugt wird als Phosphitstabilisator wenigstens Hostanox® P-EPQ [CAS 119345-01-6] der Clariant International Ltd., Muttenz, Schweiz eingesetzt. Dieses enthält das erfindungsgemäß insbesondere ganz besonders bevorzugt als Komponente c) einzusetzende Tetrakis(2,4-di-tert-butylphenyl)-1,1-biphenyl-4,4'-diylbisphosphonit [CAS 38613-77-3].

Erfindungsgemäß besonders bevorzugt sind Zusammensetzungen, daraus herzustellende Formmassen und darauf basierende Erzeugnisse enthaltend auf

a) 100 Massenanteile wenigstens eines Polyesters,

b) 70 bis 600 Massenanteile, vorzugsweise 125 bis 400 Massenanteile, besonders bevorzugt 150 bis 300 Massenanteile, mit wenigstens einem Aminosilan und/oder Epoxysilan oberflächenbehandeltes $Al_2O_3$, und

c) 0,017 bis 12,5 Massenanteile Tetrakis(2,4-di-tert-butylphenyl)-1,1-biphenyl-4,4'-diylbisphosphonit.

Die Erfindung betrifft besonders bevorzugt ein Verfahren zur Reduzierung der Abrasivität wärmeleitfähiger Polyesterzusammensetzungen, dadurch gekennzeichnet, dass das einzusetzende $Al_2O_3$, dessen Oberfläche mit wenigstens einem Amino- und/oder Epoxysilan oberflächenbehandelt ist, mit einer Polyesterzusammensetzung in Kontakt gebracht wird, die wenigstens einen Phosphitstabilisator aus der Gruppe Tris(2,4-ditert-butylphenyl)phosphit, Bis(2,4-di-tert-butylphenyl)pentaerythritol-diphosphit, Bis(2,6-di-ter-butyl-4-methylphenyl)pentaerythritol-diphosphit, Bis(2,4-dicumylphenyl)pentaerythritol-diphosphit, Tris(nonylphenyl)phosphit, (2,4,6-tri-t-butylphenol)2-butyl-2-ethyl-1,3-propanediol-phosphit, Tetrakis(2,4-di-tert-butylphenyl)-1,1-biphenyl-4,4'-diylbisphosphonit und polymere Phosphorigsäureester, die Oxetangruppen enthalten und von denen 50% oder mehr aller Moleküle mindestens vier Monomere aus der Gruppe eines zwei- oder mehrwertigen Phenols und/oder Ester der phosphorigen Säure enthalten, enthält.

Die Erfindung betrifft zudem die Verwendung von mit wenigstens einem Aminosilan und/oder Epoxysilan oberflächenbehandeltem $Al_2O_3$ zur Reduzierung der Abrasion in Verarbeitungsmaschinen für die Verarbeitung von Polyesterzusammensetzungen, wobei das Aluminiumoxid in Kombination mit wenigstens einem Phosphitstabilisator aus der Gruppe Tris(2,4-ditert-butylphenyl)phosphit, Bis(2,4-di-tert-butylphenyl)pentaerythritol-diphosphit, Bis(2,6-di-ter-butyl-4-methylphenyl)pentaerythritol-diphosphit, Bis(2,4-dicumylphenyl)pentaerythritol-diphosphit, Tris(nonylphenyl)phosphit, (2,4,6-tri-t-butylphenol)2-butyl-2-ethyl-1,3-propanediol-phosphit, Tetrakis(2,4-di-tert-butylphenyl)-1,1-biphenyl-4,4'-diylbisphosphonit und polymere Phosphorigsäureester, die Oxetangruppen enthalten und von denen 50% oder mehr aller Moleküle mindestens vier Monomere aus der Gruppe eines zwei- oder mehrwertigen Phenols und/oder Ester der phosphorigen Säure enthalten, eingesetzt wird.

**Komponente d)**

In einer Ausführungsform werden als Komponente d) wenigstens ein Entformungsmittel oder wenigstens ein Nukleierungsmittel eingesetzt.

Erfindungsgemäß als Komponente d) bevorzugt einzusetzende Nukleierungsmittel sind Natrium- oder Calciumphenylphosphinat oder Siliziumdioxid oder Talkum, besonders bevorzugt Talkum. Talkum ist ein Magnesiumsilikathydrat mit der chemischen Zusammensetzung $Mg_3[Si_4O_{10}(OH)_2]$.

Erfindungsgemäß als Komponente d) bevorzugt einzusetzende Entformungsmittel sind langkettige Fettsäuren, deren Salze, sowie deren Esterderivate oder Amidderivate, Montanwachsester, sowie niedermolekulare Polyethylen- bzw. Polypropylenwachse in oxidierter und nicht-oxidierter Form.

Bevorzugte Fettsäure ist Stearinsäure. Bevorzugte Salze der Fettsäuren sind Calciumstearat oder Zinkstearat. Bevorzute Esterderivate der Fettsäuren sind Stearylstearat oder Glycerintristearat. Bevorzugte Montanwachsester sind Ester von Montansäuren mit multifunktionellen Alkoholen, insbesondere mit Ethylenglykol.

Erfindungsgemäß bevorzugte Gleit- und/oder Entformungsmittel sind ferner die Gruppe der Ester oder Amide gesättigter oder ungesättigter aliphatischer Carbonsäuren mit 8 bis 40 C-Atomen mit aliphatischen gesättigten Alkoholen oder Aminen mit 2 bis 40 C-Atomen.

In einer weiteren bevorzugten Ausführungsform enthalten die erfindungsgemäßen Formmassen Mischungen der oben genannten Gleit- und/oder Entformungsmittel. Die insbesondere bevorzugt einzusetzenden Montanwachsester und deren Salze verbessern die Fließfähigkeit von Kunststoffen wie Polyestern allein durch innere Gleitwirkung, ohne das Molekulargewicht des Polymeren zu reduzieren. Insbesondere ganz besonders bevorzugt werden Ester der Montansäure mit multifunktionellen Alkoholen eingesetzt, die von der Clariant GmbH, als Licowax® E [CAS 73138-45-1] angeboten werden.

In einer Ausführungsform betrifft die vorliegende Erfindung Zusammensetzungen und daraus herzustellende Formmassen und darauf basierende Erzeugnisse enthaltend auf

a) 100 Massenanteile wenigstens eines Polyesters,
b) 70 bis 600 Massenanteile, vorzugsweise 125 bis 400 Massenanteile, besonders bevorzugt 150 bis 300 Massenanteile, mit wenigstens einem Aminosilan und/oder Epoxysilan oberflächenbehandeltes $Al_2O_3$,
c) 0,017 bis 12,5 Massenanteile wenigstens eines Phosphitstabilisators ausgewählt aus der Gruppe Tris(2,4-ditert-butylphenyl)phosphit, Bis(2,4-di-tert-butylphenyl)pentaerythritol-diphosphit, Bis(2,6-di-ter-butyl-4-methylphenyl)pentaerythritol-diphosphit, Bis(2,4-dicumylphenyl)pentaerythritol-diphosphit, Tris(nonylphenyl)phosphit, (2,4,6-tri-t-butylphenol)2-butyl-2-ethyl-1,3-propanediol-phosphit,Tetrakis(2,4-di-tert-butylphenyl)-1,1-biphenyl-4,4'-diylbisphosphonit und polymere Phosphorigsäureester, die Oxetangruppen enthalten und von denen 50% oder mehr aller Moleküle mindestens vier Monomere aus der Gruppe eines zwei- oder mehrwertigen Phenols und/oder Ester der phosphorigen Säure enthalten, und
d) 0,001 bis 10 Massenanteile wenigstens eines Esters der Montansäure mit multifunktionellen Alkoholen oder Talkum.

Erfindungsgemäß bevorzugt sind Zusammensetzungen, daraus herzustellende Formmassen und darauf basierende Erzeugnisse enthaltend auf

a) 100 Massenanteile wenigstens eines Polyesters,
b) 70 bis 600 Massenanteile, vorzugsweise 125 bis 400 Massenanteile, besonders bevorzugt 150 bis 300 Massenanteile, mit wenigstens einem Aminosilan und/oder Epoxysilan oberflächenbehandeltes $Al_2O_3$, und
c) 0,017 bis 12,5 Massenanteile Tetrakis(2,4-di-tert-butylphenyl)-1,1-biphenyl-4,4'-diylbisphosphonit, und
d) 0,001 bis 10 Massenanteile wenigstens eines Esters der Montansäure mit multifunktionellen Alkoholen oder Talkum.

In einer Ausführungsform betrifft die vorliegende Erfindung Zusammensetzungen und daraus herzustellende Formmassen und darauf basierende Erzeugnisse, worin auf

a) 100 Massenanteile PBT,
b) 70 bis 600 Massenanteile, vorzugsweise 125 bis 400 Massenanteile, besonders bevorzugt 150 bis 300 Massenanteile, mit wenigstens einem Aminosilan und/oder Epoxysilan oberflächenbehandeltes $Al_2O_3$,
c) 0,017 bis 12,5 Massenanteile wenigstens eines Phosphitstabilisators ausgewählt aus der Gruppe Tris(2,4-ditert-butylphenyl)phosphit, Bis(2,4-di-tert-butylphenyl)pentaerythritol-diphosphit, Bis(2,6-di-ter-butyl-4-methylphenyl)pentaerythritol-diphosphit, Bis(2,4-dicumylphenyl)pentaerythritol-diphosphit, Tris(nonylphenyl)phosphit, (2,4,6-tri-t-butylphenol)2-butyl-2-ethyl-1,3-propanediol-phosphit , Tetrakis(2,4-di-tert-butylphenyl)-1,1-biphenyl-4,4'-diylbisphosphonit und polymere Phosphorigsäureester, die Oxetangruppen enthalten und von denen 50% oder mehr aller Moleküle mindestens vier Monomere aus der Gruppe eines zwei- oder mehrwertigen Phenols und/oder Ester der phosphorigen Säure enthalten,
d) 0,001 bis 10 Massenanteile wenigstens eines Esters der Montansäure mit multifunktionellen Alkoholen oder Talkum, und
e) 0,001 bis 150 Massenanteile wenigstens eines weiteren von den Komponenten b), c) und d) verschiedenen Additivs eingesetzt werden.

Erfindungsgemäß bevorzugt sind Zusammensetzungen, daraus herzustellende Formmassen und darauf basierende Erzeugnisse enthaltend auf

a) 100 Massenanteile PBT,

b) 70 bis 600 Massenanteile, vorzugsweise 125 bis 400 Massenanteile, besonders bevorzugt 150 bis 300 Massenanteile, mit wenigstens einem Aminosilan und/oder Epoxysilan oberflächenbehandeltes $Al_2O_3$, und

c) 0,017 bis 12,5 Massenanteile Tetrakis(2,4-di-tert-butylphenyl)-1,1-biphenyl-4,4'-diylbisphosphonit, und

d) 0,001 bis 10 Massenanteile wenigstens eines Esters der Montansäure mit multifunktionellen Alkoholen und Talkum.

In einer Ausführungsform betrifft die vorliegende Erfindung Zusammensetzungen und daraus herzustellende Formmassen und darauf basierende Erzeugnisse, worin auf

a) 100 Massenanteile PBT,
b) 70 bis 600 Massenanteile, vorzugsweise 125 bis 400 Massenanteile, besonders bevorzugt 150 bis 300 Massenanteile, mit wenigstens einem Aminosilan oberflächenbehandeltes $Al_2O_3$,
c) 0,017 bis 12,5 Massenanteile wenigstens eines Phosphitstabilisators ausgewählt aus der Gruppe Tris(2,4-ditert-butylphenyl)phosphit, Bis(2,4-di-tert-butylphenyl)pentaerythritol-diphosphit, Bis(2,6-di-ter-butyl-4-methylphenyl)pentaerythritol-diphosphit, Bis(2,4-dicumylphenyl)pentaerythritol-diphosphit, Tris(nonylphenyl)phosphit, (2,4,6-tri-t-butylphenol)2-butyl-2-ethyl-1,3-propanediol-phosphit, Tetrakis(2,4-di-tert-butylphenyl)-1,1-biphenyl-4,4'-diylbisphosphonit und polymere Phosphorigsäureester, die Oxetangruppen enthalten und von denen 50% oder mehr aller Moleküle mindestens vier Monomere aus der Gruppe eines zwei- oder mehrwertigen Phenols und/oder Ester der phosphorigen Säure enthalten,
d) 0,001 bis 10 Massenanteile wenigstens eines Esters der Montansäure mit multifunktionellen Alkoholen und Talkum, und
e) 0,001 bis 150 Massenanteile wenigstens eines weiteren von den Komponenten b), c) und d) verschiedenen Additivs eingesetzt werden.

In einer Ausführungsform betrifft die vorliegende Erfindung Zusammensetzungen und daraus herzustellende Formmassen und darauf basierende Erzeugnisse, worin auf

a) 100 Massenanteile PBT,
b) 70 bis 600 Massenanteile, vorzugsweise 125 bis 400 Massenanteile, besonders bevorzugt 150 bis 300 Massenanteile, mit wenigstens einem Aminosilan oberflächenbehandeltes $Al_2O_3$,
c) 0,017 bis 12.5 Massenanteile Tetrakis(2,4-di-tert-butylphenyl)-1,1-biphenyl-4,4'-diylbisphosphonit,
d) 0,001 bis 10 Massenanteile wenigstens eines Esters der Montansäure mit multifunktionellen Alkoholen und Talkum, und
e) 0,001 bis 150 Massenanteile wenigstens eines weiteren von den Komponenten b), c) und d) verschiedenen Additivs eingesetzt werden.

In einer Ausführungsform kann auf Komponente d) verzichtet werden. In diesem Fall enthält eine Zusammensetzung, Formmasse oder Erzeugnis die Komponenten a), b), c) und e).

**Komponente e)**

Gegebenenfalls als Komponente e) einzusetzende weitere Additive sind von den Komponenten b), c) und d) verschiedene Substanzen aus der Gruppe der UV-Stabilisatoren, Gammastrahlenstabilisatoren, Hydrolysestabilisatoren, Antistatika, Emulgatoren, Weichmacher, Verarbeitungshilfsmittel, Schlagzähmodifikatoren oder Elastomermodifikatoren, Füll- und Verstärkungsstoffe, Gleitmittel, Farbstoffe, Flammschutzmittel oder Pigmente. Die genannten und weitere geeignete Additive sind Stand der Technik und können vom Fachmann beispielsweise im Plastics Additives Handbook, 5th Edition, Hanser-Verlag, München, 2001, Seiten 80-84, 546-547, 688, 872-874, 938, 966 aufgefunden werden. Die als Komponente e) einzusetzenden Zusatzstoffe können alleine oder in Mischung bzw. in Form von Masterbatchen eingesetzt werden.

Erfindungsgemäß bevorzugt als Komponente e) einzusetzende UV-Stabilisatoren sind substituierte Resorcine, Salicylate, Benzotriazole oder Benzophenone.

Erfindungsgemäß als Komponente e) einzusetzende Schlagzähmodifikatoren oder Elastomermodifikatoren sind Copolymerisate, die bevorzugt aus mindestens zwei Monomeren aus der Gruppe Ethylen, Propylen, Butadien, Isobuten, Isopren, Chloropren, Vinylacetat, Styrol, Acrylnitril und Acrylsäureester oder Methacrylsäureester mit 1 bis 18 C-Atomen in der Alkoholkomponente aufgebaut sind. Die Copolymerisate können kompatibilisierende Gruppen, bevorzugt Maleinsäureanhydrid oder Epoxid enthalten.

Erfindungsgemäß als Komponente e) einzusetzende Farbstoffe oder Pigmente sind anorganische Pigmente, besonders bevorzugt Titandioxid, Ultramarinblau, Eisenoxid, Zinksulfid oder Russ, sowie organische Pigmente, besonders bevorzugt Phthalocyanine, Chinacridone, Perylene sowie Farbstoffe, besonders bevorzugt Nigrosin oder Anthrachinone als Farbmittel sowie andere Farbmittel. Insbesondere bevorzugt werden Ruß und/oder Nigrosin eingesetzt.

Erfindungsgemäß als Komponente e) einzusetzende Füll- und Verstärkungsstoffe sind faserförmige, nadelförmige oder teilchenförmige Füll- und Verstärkungsstoffe verschieden von Aluminiumoxid. Besonders bevorzugt sind Kohlenstofffasern, Glaskugeln, amorphe Kieselsäure, Calciumsilicat, Calciummetasilicat, Magnesiumcarbonat, Kaolin, calciniertes Kaolin, Kreide, gepulverter Quarz, Glimmer, Phlogopit, Bariumsulfat, Feldspat, Wollastonit, Kyanit bzw.

Aluminiumsilikat, Montmorillonit, Magnesiumoxid, Zinkoxid, Bornitrid, Graphit, Carbon Nanotubes, Graphen, Eisenoxide, Ferrite, Magnetit, Kupfer, Aluminium, Titandioxid, oder Glasfasern, ganz besonders bevorzugt Glasfasern, insbesondere bevorzugt Glasfasern aus E-Glas. Die faserförmigen oder teilchenförmigen Verstärkungsstoffe sind in einer bevorzugten Ausführungsform zur besseren Verträglichkeit mit Thermoplasten mit geeigneten Oberflächenmodifizierungen, insbesondere Oberflächenmodifizierungen enthaltend Silanverbindungen versehen.

Erfindungsgemäß als Komponente e) einzusetzende Wärmeleitfähigkeitsadditive, sind vorzugsweise auszuwählen aus der Gruppe Aluminiumsilikat, insbesondere Kyanit, Montmorillonit, Magnesiumoxid, Zinkoxid, Bornitrid, Graphit, Carbon Nanotubes, Graphen, Eisenoxide, Ferrite, Magnetit, Kupfer, Aluminium und Titandioxid.

Erfindungsgemäß als Komponente e) einzusetzende Flammschutzmittel sind vorzugsweise mineralische Flammschutzmittel, stickstoffhaltige Flammschutzmittel oder phosphorhaltige Flammschutzmittel.

Bevorzugte stickstoffhaltige Flammschutzmittel sind die Reaktionsprodukte aus Trichlortriazin, Piperazin und Morpholin [CAS 1078142-02-5], insbesondere MCA PPM Triazin HF der Fa. MCA Technologies GmbH, Biel-Benken, Schweiz, ferner Melamincyanurat und Kondensationsprodukte des Melamins wie z.B. Melem, Melam, Melon bzw. höherkondensierte Verbindungen dieses Typs. Bevorzugte anorganische stickstoffhaltige Verbindungen sind Ammoniumsalze.

Ferner können auch Salze aliphatischer und aromatischer Sulfonsäuren und mineralische Flammschutzadditive, vorzugsweise Aluminiumhydroxid, Ca-Mg-Carbonat-Hydrate (z.B. DE-A 4 236 122) oder Magnesiumhydroxid als Flammschutzmittel der Komponente e) eingesetzt werden.

Unter den mineralischen Flammschutzmitteln ist Magnesiumhydroxid besonders bevorzugt. Magnesiumhydroxid [CAS 1309-42-8] kann aufgrund seiner Herkunft und Herstellungsweise verunreinigt sein. Typische Verunreinigungen sind z.B. Silicium-, Eisen-, Calcium- und/oder Aluminium-haltige Spezies, die beispielsweise in Form von Oxiden in den Magnesiumhydroxid-Kristallen eingelagert sein können. Die Oberfläche des erfindungsgemäß in einer Ausführungsform als Flammschutzmittel in Komponente e) einzusetzenden Magnesiumhydroxids kann unbeschlichtet oder aber mit einer Schlichte versehen sein, wobei man unter einer Schlichte eine Imprägnierflüssigkeit versteht, um der Oberfläche eines Stoffes zu bestimmten Eigenschaften zu verhelfen. Vorzugsweise wird das Magnesiumhydroxid mit Schlichten auf Basis von Stearaten oder Aminosiloxanen, besonders bevorzugt mit Aminosiloxanen versehen. Vorzugsweise einzusetzendes Magnesiumhydroxid hat eine mittlere Teilchengröße d50 im Bereich von 0,5 $\mu$m bis 6 $\mu$m, wobei ein d50 im Bereich von 0,7 $\mu$m bis 3,8 $\mu$m bevorzugt und ein d50 im Bereich von 1,0 $\mu$m bis 2,6 $\mu$m besonders bevorzugt ist und die mittlere Teilchengröße gemäß ISO 13320 durch Laserdiffraktometrie ermittelt wird. Erfindungsgemäß geeignete Magnesiumhydroxidtypen sind beispielsweise Magnifin® H5IV der Martinswerk GmbH, Bergheim, Deutschland oder Hidromag® Q2015 TC der Firma Penoles, Mexiko-Stadt, Mexico.

In Frage kommen für Komponente e) ferner Flammschutzmittelsynergisten aus der Gruppe der sauerstoff- stickstoff- oder schwefelhaltigen Metallverbindungen, wobei zinkfreie Verbindungen insbesondere Molybdänoxid, Magnesiumoxid, Magnesiumcarbonat, Calciumcarbonat, Calciumoxid, Titannitrid, Magnesiumnitrid, Calciumphosphat, Calciumborat, Magnesiumborat oder deren Mischungen besonders bevorzugt sind.

In einer alternativen Ausführungsform können als Komponente e) aber auch - sofern es der Bedarf erfordert - zinkhaltige Verbindungen eingesetzt werden. Hierzu zählen bevorzugt Zinkoxid, Zinkborat, Zinkstannat, Zinkhydroxystannat, Zinksulfid und Zinknitrid, oder deren Mischungen.

Bevorzugte als Komponente e) einzusetzende phosphorhaltige Flammschutzmittel sind organische Metallphosphinate, insbesondere Aluminium-tris(diethylphosphinat), Aluminiumsalze der Phosphonsäure, roter Phosphor, anorganische Metallhypophosphite, insbesondere Aluminiumhypophosphit, weitere Metallphosphonate insbesondere Calciumphosphonat, Derivate der 9,10-Dihydro-9-oxa-10-phosphaphenanthren-10-oxide (DOPO-Derivate), Resorcinol-bis-(diphenylphosphat) (RDP), einschließlich Oligomere sowie Bisphenol-A-bis-diphenylphosphat (BDP) einschließlich Oligomere, ferner Melaminpyrophosphat und Melaminpolyphosphat, ferner Melamin-poly(aluminiumphosphat), Melamin-poly(zinkphosphat) oder Phenoxyphosphazenoligomere und deren Mischungen.

Weitere als Komponente e) einzusetzende Flammschutzmittel sind Kohlebildner, besonders bevorzugt Phenol-Formaldehydharze, Polycarbonate, Polyimide, Polysulfone, Polyethersulfone oder Polyetherketone sowie Antitropfmittel, insbesondere Tetrafluorethylenpolymerisate.

Die als Komponente e) einzusetzenden Flammschutzmittel können in Reinform, sowie über Masterbatche oder Kompaktate zugesetzt werden.

In einer alternativen Ausführungsform können als Komponente e) einzusetzende Flammschutzmittel aber auch halogenhaltige Flammschutzmittel eingesetzt werden. Bevorzugte halogenhaltige Flammschutzmittel sind handelsübliche organische Halogenverbindungen, besonders bevorzugt Ethylen-1,2-bistetrabromphthalimid, Decabromdiphenylethan, Tetrabrombisphenol-A-epoxyoligomer, Tetrabrombisphenol-A-oligocarbonat, Tetrachlorbisphenol-A-oligocarbonat, Polypentabrombenzylacrylat, bromiertes Polystyrol oder bromierte Polyphenylenether, die alleine oder in Kombination mit Synergisten, insbesondere Antimontrioxid oder Antimonpentoxid, eingesetzt werden können, wobei unter den halogenhaltigen Flammschutzmitteln bromiertes Polystyrol besonders bevorzugt ist. Bromiertes Polystyrol ist in diversen Produktqualitäten kommerziell verfügbar. Beispiele hierfür sind z.B. Firemaster® PBS64 der Fa. Lanxess, Köln, Deutschland sowie Saytex® HP-3010 der Fa. Albemarle, Baton Rouge, USA.

Unter den als Komponente e) einzusetzenden Flammschutzmitteln sind Aluminium-tris(diethylphosphinat)] [CAS 225789-38-8] sowie die Kombination aus Aluminium-tris(diethylphosphinat) und Melaminpolyphosphat oder die Kombination aus Aluminium-tris(diethylphosphinat) und mindestens einem Aluminiumsalz der Phosphonsäure ganz besonders bevorzugt, wobei letztere Kombination insbesondere bevorzugt ist.

Als geeignetes Aluminium-tris(diethylphosphinat) kommt z.B. das Exolit® OP1230 oder Exolit® OP1240 der Fa. Clariant International Ltd. Muttenz, Schweiz in Frage. Melaminpolyphosphat ist in diversen Produktqualitäten kommerziell verfügbar. Beispiele hierfür sind z.B. Melapur® 200/70 der Fa. BASF, Ludwigshafen, Deutschland sowie Budit® 3141 der Fa. Budenheim, Budenheim, Deutschland.

Bevorzugte Aluminiumsalze der Phosphonsäure sind ausgewählt aus der Gruppe primäres Aluminiumphosphonat $[Al(H_2PO_3)_3]$,

basisches Aluminiumphosphonat $[Al(OH)H_2PO_3)_2 \cdot 2H_2O]$,
$Al_2(HPO_3)_3 \cdot x\ Al_2O_3 \cdot n\ H_2O$ mit x im Bereich von 2,27 bis 1 und n im Bereich von 0 bis 4,

$$Al_2(HPO_3)_3 \cdot (H_2O)_q \qquad (Z1)$$

mit q im Bereich von 0 bis 4, insbesondere Aluminiumphosphonattetrahydrat $[Al_2(HPO_3)_3 \cdot 4H_2O]$ oder sekundäres Aluminiumphosphonat $[Al_2(HPO_3)_3]$,

$$Al_2M_z(HPO_3)_y(OH)_v \cdot (H_2O)_w \qquad (Z2)$$

worin M für wenigstens ein Alkalimetallion steht und z im Bereich von 0,01 bis 1,5, y im Bereich von 2,63 - 3,5, v im Bereich von 0 bis 2 und w im Bereich von 0 bis 4 liegt, und

$$Al_2(HPO_3)_u(H_2PO_3)_t \cdot (H_2O)_s \qquad (Z3)$$

worin u im Bereich von 2 bis 2,99, t im Bereich von 2 bis 0,01 und s im Bereich von 0 bis 4 liegt,

wobei in Formel (Z2) z, y und v sowie in Formel (Z3) u und t nur solche Zahlen annehmen können, dass das entsprechende Aluminiumsalz der Phosphonsäure als Ganzes ungeladen ist. Bevorzugte Alkalimetalle in Formel (Z2) sind Natrium und Kalium. Die beschriebenen Aluminiumsalze der Phosphonsäure können dabei einzeln oder im Gemisch eingesetzt werden.

Besonders bevorzugte Aluminiumsalze der Phosphonsäure werden ausgewählt aus der Gruppe
primäres Aluminiumphosphonat $[Al(H_2PO_3)_3]$,
sekundäres Aluminiumphosphonat $[Al_2(HPO_3)_3]$,
basisches Aluminiumphosphonat $[Al(OH)H_2PO_3)_2 \cdot 2H_2O]$,
Aluminiumphosphonattetrahydrat $[Al_2(HPO_3)_3 \cdot 4H_2O]$ und
$Al_2(HPO_3)_3 \cdot x\ Al_2O_3 \cdot n\ H_2O$ mit x im Bereich von 2,27 bis 1 und n im Bereich von 0 bis 4. Ganz besonders bevorzugt sind sekundäres Aluminiumphosphonat $[Al_2(HPO_3)_3$, [CAS 71449-76-8] und sekundäres Aluminiumphosphonattetrahydrat $[Al_2(HPO_3)_3 \cdot 4H_2O$, [CAS 156024-71-4], insbesondere bevorzugt ist sekundäres Aluminiumphosphonat $[Al_2(HPO_3)_3]$. Die Herstellung der als Flammschutzmittel der Komponente e) einzusetzenden Aluminiumsalze der Phosphonsäure ist zum Beispiel in WO 2013/083247 A1 beschrieben. Ferner ist Gegenstand der vorliegenden Erfindung ein Verfahren zur Herstellung erfindungsgemäßer Formmassen, wobei man die Komponenten a) bis c) sowie gegebenenfalls d) und gegebenenfalls e) in entsprechenden Massenanteilen in wenigstens einem Mischaggregat mischt oder vermengt. Vorzugsweise werden dabei die einzusetzenden Komponenten zu einer Formmasse geknetet, compoundiert, extrudiert oder gewalzt. Bevorzugt erfolgt dies bei einer Temperatur im Bereich von 230 bis 400°C, besonders bevorzugt durch Compoundieren auf einem gleichläufigen Zweiwellenextruder oder Buss-Kneter. Es kann vorteilhaft sein, einzelne Komponenten vorzumischen.

Gegenstand der vorliegenden Anmeldung ist auch die Verwendung bzw. Verarbeitung der aus den erfindungsgemäß einzusetzenden Komponenten herzustellenden Formmassen im Extrusionsprozess, in Blasformverfahren oder im Spritzguss zur Herstellung von Erzeugnissen, bevorzugt von Formteilen oder Halbzeugen.

Erfindungsgemäße Verfahren zur Herstellung von Erzeugnissen mittels Extrusion, Blasformen oder Spritzguss werden bei Schmelzetemperaturen im Bereich von 230 bis 330°C, bevorzugt von 250 bis 300°C sowie gegebenenfalls zusätzlich bei Drücken von maximal 2500 bar, bevorzugt bei Drücken von maximal 2000 bar, besonders bevorzugt bei Drücken von maximal 1500 bar und ganz besonders bevorzugt bei Drücken von maximal 750 bar durchgeführt.

Bei der Extrusion, auch als Strangpressen bezeichnet, werden feste bis dickflüssige härtbare thermoplastische Formmassen unter Druck kontinuierlich aus einer formgebenden Öffnung, vorzugsweise als Düse, Matrize oder Mundstück bezeichnet, herausgepresst. Dabei entstehen Erzeugnisse mit dem Querschnitt der Öffnung in theoretisch beliebiger Länge (**http://de.wikipedia.org/wiki/Extrusion_(Verfahrenstechnik**). Die grundsätzlichen Verfahrensschritte des Profil-Extrusionsverfahrens, einer Verfahrensform der Extrusion, sind:

1. Plastifizieren und Bereitstellen der thermoplastischen Schmelze in einem Extruder,
2. Extrusion des thermoplastischen Schmelzestrangs durch eine Kalibrierhülse, die den Querschnitt des zu extrudierenden Profils aufweist,
3. Abkühlung des extrudierten Profils in einem Kalibriertisch,
4. Weitertransport des Profils mit einem Abzug hinter dem Kalibriertisch,
5. Ablängen des zuvor endlosen Profils in einer Schneideanlage,
6. Sammeln der abgelängten Profile an einem Sammeltisch.

Eine Beschreibung der Extrusion von Polyalkylenterephthalaten erfolgt in Kunststoff-Handbuch Band VIII, Polyester, Carl Hanser Verlag, München 1973, Seite 730-731.

Das Verfahren des Blasformens ist beispielsweise in **http://www.blasformen.com/** beschrieben. Beim Blasformen wird im ersten Verfahrensschritt mittels eines beheizten Extruders Kunststoffgranulat eingezogen, verdichtet, entgast, aufgeheizt, plastifiziert und zu einem plastischen Kunststoffstrang homogenisiert. Im nächsten Schritt wird die Kunststoffmasse in einen an den Extruder angeflanschten Schlauchkopf geführt. Dort wird die Kunststoffschmelze zu einem Schlauch geformt, der senkrecht aus einer Düse nach unten austritt. Der Schlauchdurchmesser wird mit unterschiedlich großen Dorn- und Düsennormalien, die an den Schlauchkopf angeflanscht werden, an den zu fertigenden Artikel angepasst. Die Schlauchdicke und das daraus resultierende Gewicht der Blasformteile wird durch die Auswahl von unterschiedlichen Durchmesser- Differenzen von Dorn zu Düse vorbestimmt.

Der Spritzguss zeichnet sich dadurch aus, dass der Rohstoff, also die zu verarbeitende thermoplastische Formmasse enthaltend die erfindungsgemäß einzusetzenden Komponenten, bevorzugt in Granulatform, in einem beheizten zylindrischen Hohlraum aufgeschmolzen (plastifiziert) und als Spritzmasse unter Druck in einem temperierten Hohlraum gespritzt wird. Nach dem Abkühlen (Erstarren) der Masse wird das Spritzgussteil entformt.

Man unterscheidet

1. Plastifizieren / Aufschmelzen
2. Einspritzphase (Füllvorgang)
3. Nachdruckphase (wegen thermischer Kontraktion bei der Kristallisation)
4. Entformen.

Eine Spritzgießmaschine besteht aus einer Schließeinheit, der Spritzeinheit, dem Antrieb und der Steuerung. Zur Schließeinheit gehören feste und bewegliche Aufspannplatten für das Werkzeug, eine Stirnplatte sowie Säulen und Antrieb der beweglichen Werkzeugaufspannplatte. (Kniehebelgelenk oder hydraulische Schließeinheit).

Eine Spritzeinheit umfasst den elektrisch beheizbaren Zylinder, den Antrieb der Schnecke (Motor, Getriebe) und die Hydraulik zum Verschieben der Schnecke und Spritzeinheit. Die Aufgabe der Spritzeinheit besteht darin, das Pulver bzw. das Granulat aufzuschmelzen, zu dosieren, einzuspritzen und nachzudrücken (wegen Kontraktion). Das Problem des Rückflusses der Schmelze innerhalb der Schnecke (Leckströmung) wird durch Rückstromsperren gelöst.

Im Spritzgießwerkzeug wird dann die einströmende Schmelze der zu verarbeitenden und die erfindungsgemäß einzusetzenden Komponenten enthaltenden Formmasse gelöst, gekühlt und somit das zu fertigende Bauteil gefertigt. Notwendig dazu sind immer zwei Werkzeughälften. Beim Spritzguss unterscheidet man folgende Funktionskomplexe:

- Angusssystem
- Formbildende Einsätze
- Entlüftung
- Maschinen- und Kraftaufnahme
- Entformungssystem und Bewegungsübertragung
- Temperierung

Im Gegensatz zum Spritzguss wird bei der Extrusion ein endlos geformter Strang aus der erfindungsgemäßen einzusetzenden Formmasse im Extruder eingesetzt, wobei der Extruder eine Maschine zur Herstellung von Erzeugnissen auf Basis thermoplastischer Formstücke ist. Man unterscheidet Einschneckenextruder und Doppelschneckenextruder sowie die jeweiligen Untergruppen, konventioneller Einschneckenextruder, förderwirksamer Einschneckenextruder, gegenläufiger Doppelschneckenextruder und gleichläufiger Doppelschneckenextruder.

Extrusionsanlagen zum Herstellen von Profilen bestehen aus: Extruder, Profil-Werkzeug, Kalibrierung, Kühlstrecke, Raupen- und Rollenabzug, Trennvorrichtung und Kipprinne.

Die vorliegende Erfindung betrifft folglich auch Erzeugnisse, bevorzugt Formteile, Formkörper oder Halbzeuge, erhältlich durch Extrusion oder Spritzguss der erfindungsgemäßen, wenigstens die Komponenten a), b) und c) sowie gegebenenfalls d) und gegebenenfalls e) enthaltenden Formmassen.

Die vorliegende Erfindung betrifft die Verwendung der durch Extrusion oder Spritzguss aus Formmassen, enthaltend wenigstens die Komponenten a), b) und c) sowie ggf. d) und ggf. e) hergestellten elektrisch isolierenden aber thermisch leitenden Erzeugnisse, bevorzugt Formteile, Formkörper oder Halbzeuge, für elektrische oder elektronische Bauteile. Diese erfindungsgemäßen Erzeugnisse können bevorzugt in der Kraftfahrzeug-, Elektro-, Elektronik-, Telekommunikations-, Solar-, Informationstechnologie-, Computer- Industrie, im Haushalt, Sport, in der Medizin oder in der Unterhaltungsindustrie angewandt werden. Insbesondere können erfindungsgemäße Erzeugnisse für Anwendungen eingesetzt werden, bei denen eine verbesserte Wärmeleitung und gute mechanische Eigenschaften notwendig sind. Bevorzugt für derartige Anwendungen ist die Verwendung für Formteile in der Elektrotechnik und in Fahrzeugen, insbesondere Bauteile in Kraftfahrzeugen (KFZ).

Die vorliegende Erfindung betrifft deshalb auch die Verwendung der erfindungsgemäßen thermoplastischen Formmassen zur Herstellung von Formteilen und Halbzeugen und wiederum daraus herzustellender Erzeugnisse mit erhöhter Wärmeleitfähigkeit, bevorzugt von Formteilen für Kraftfahrzeuge.

**Beispiele:**

Die einzelnen Komponenten a), b), c) und gegebenenfalls d) und gegebenenfalls e) wurden in einem Zweiwellenextruder des Typs ZSK 26 Compounder der Firma Coperion Werner & Pfleiderer (Stuttgart, Deutschland) bei einer Temperatur von ca. 270 °C gemischt, als Strang in ein Wasserbad ausgetragen, bis zur Granulierfähigkeit abgekühlt und granuliert. Das Granulat wurde bei 120°C im Vakuumtrockenschrank für 4h getrocknet.

Anschließend wurde das Granulat auf einer Spritzgieß-Maschine vom Typ Arburg SG370-173732 bei Massetemperaturen im Bereich von 270 bis 300°C und Werkzeugtemperaturen im Bereich von 80 bis 100°C zu Schulterstäben (4mm Dicke gemäß ISO 528), zu Flachstäben (80mm·10mm·4mm) und zu Platten mit den Maßen 60 mm · 40 mm · 2 mm verarbeitet. Die Platten wurden anschließend auf die Maße 12,7 mm · 12,7 mm · 2 mm gefräst.

Die mechanischen Eigenschaften der aus den Formmassen hergestellten Erzeugnisse wurden im Zugversuch nach ISO 527 sowie im Schlagversuch nach ISO180-1U bestimmt; die Wärmeleitfähigkeit wurde an Platten mit den Maßen 12,7 mm · 12,7 mm · 2 mm nach ISO 22007-4 bestimmt.

Das Verschleißverhalten von Verarbeitungsmaschinen, im folgenden "Abrasion" genannt, insbesondere Extruder und Spritzgussmaschinen, wurde in Anlehnung an den Verschleißtest des DKI Darmstadt (**Veröffentlichung FG Kunststoffe, Projektnummer 12245** - **Neue Verschleißapparaturen, Projekt-Nr. AiF 12245N (DKI 18/0-87), Laufzeit 01.12.1999 bis 28.02.2003)** nachgestellt. Die Abrasion wurde gravimetrisch anhand des Materialabtrags, welcher durch den Spritzguss von 100 Schuss (1 Schuss = 3D) einer Polyester basierten Zusammensetzung, mit einer Einspritzgeschwindigkeit von $v$ = 30 mm/s und einem Schneckendurchmesser von D = 35 mm, bei einer Massetemperatur 270°C, durch eine Düse bestehend aus zwei Metallplättchen (Stahl: 1.2738) mit den Abmessungen 12 x 12 mm und einer Schlitzbreite von 0,4 mm verursacht wird, bestimmt.

**Verwendete Materialien:**

Komponente a): PBT, linear mit einer Viskositätszahl bestimmt in einer 0,5 Gew.%-igen Lösung in einem Phenol/o-Dichlorbenzolgemisch (1/1) bei 25°C, gemäß ISO1628 von 94 ml/g.

Komponente b): mit 3-Aminopropyltriethoxysilan oberflächenbehandeltes, monomodales Aluminiumoxid CT 3000 SG der Fa. Almatis GmbH mit einem d50-Wert von 0,5 $\mu$m und einer BET-Oberfläche von 7,8 m²/g.

Phosphitstabilisator: Hostanox® P-EPQ von Clariant GmbH
Talkum: Mikrotalkum Mistron® R10 von der Firma Imerys
Montanwachsester: Licowax® E von Clariant GmbH

**Oberflächenbehandlung mit 3-Aminopropyltriethoxysilan**

Der Auftrag des Aminosilans auf das Aluminiumoxid erfolgte in der in WO 2009/156342 A1 beschriebenen Weise, indem 0,6 g 3-Aminopropyltriethoxysilan für 100 g $Al_2O_3$ zunächst zur Silanolbildung in VE-Wasser (VE = vollentsalztes Wasser) vorgelegt (250 ml VE-Wasserauf 100 g $Al_2O_3$) und bei 25 °C (Zimmertemperatur) für 30 Minuten gerührt wurde. Anschließend gab man das Aluminiumoxid hinzu, rührte die Suspension bei 80 °C, saugte das oberflächenbehandelte Aluminiumoxid ab und wusch mit VE-Wasser. Anschließend wurde 5 Stunden bei Temperaturen von etwa 120 °C getrocknet und das oberflächenbehandelte Aluminiumoxid für 30 Minuten bei 200 °C getempert.

Die in **Tabelle 1** dargestellte Zusammensetzung wurde nach der oben beschriebenen Weise verarbeitet, wobei die Angaben in Gewichtsprozent sind.

**Tabelle1**

| Inhaltsstoff | Beispiel 1 |
|---|---|
| Polyester | 49,5 |
| mit Aminosilan oberflächenbehandeltes Aluminiumoxid | 50 |
| Phosphitstabilisator | 0,1 |
| Mikrotalkum | 0,1 |
| Montanwachsester | 0,3 |
| | |
| | |
| | |
| **Messergebnis** | |
| Schlagzähigkeit IZOD ungekerbt [kJ/m$^2$] | 41 |
| Bruchdehnung [%] | 2,3 |
| Wärmeleitfähigkeit senkrecht zur Fließrichtung des Probekörpers [W/mK] | 0,5 |
| Wärmeleitfähigkeit in Fließrichtung des Probekörpers [W/mK] | 0,6 |
| Abrasion [mg] | 25 |

**Abrasionstest**

Der Abrasionstest wurde gemäß der Vorschrift in der **Veröffentlichung FG Kunststoffe, "Neu- und Weiterentwicklung von Modellprüfverfahren für den korrosiv/abrasiven Verschleiß bei der Kunststoffverarbeitung", Projekt-Nr. AiF 12245N (DKI 18/0-87), Laufzeit 01.12.1999 bis 28.02.2003** (siehe Beschreibung) durchgeführt und durch Differenzwägung der Metallplättchen vor und nach dem Versuch für Beispiel 1 ein Materialabtrag von 25 mg ermittelt. Ein Materialabtrag von lediglich 25 mg bedeutet eine geringe Abrasion. Im Sinne dieser Erfindung wird eine Abrasion mit Materialabträgen von <200 mg als vertretbar angesehen.

Die mechanischen Eigenschaften mit einer Bruchdehnung von 2,3% gemessen nach ISO527 an spritzfrischen Probekörpern und einer Schlagzähigkeit von 41 kJ/mol gemessen nach ISO180-1U an spritzfrischen Probekörpern sind im Sinne der vorliegenden Erfindung gute mechanische Eigenschaften und übererfüllen die in der Aufgabe gestellten Anforderungen von 1,5 % Bruchdehnung gemessen nach ISO527 an spritzfrischen Probekörpern bei 150 Massenanteilen Aluminiumoxid bezogen auf 100 Massenanteile Polyester und einer Schlagzähigkeit von 18 kJ/m$^2$ gemessen nach ISO180-1U an spritzfrischen Probekörpern bei 150 Massenanteilen Aluminiumoxid bezogen auf 100 Massenanteile Polyester deutlich sowie einer gegenüber dem Stand der Technik nicht eintretenden Verschlechterung.

Die Wärmeleitfähigkeit von 0,5 W/mK gemessen senkrecht zur Fließrichtung des Probekörpers nach ISO 22007-4 sowie 0,6 W/mK gemessen in Fließrichtung des Probekörpers nach ISO 22007-4 sind im Sinne der vorliegenden Erfindung akzeptable Wärmeleitfähigkeiten und übererfüllen die in der Aufgabe zur vorliegenden Erfindung gestellten Anforderungen von mindestens 0,4 W/mK.

**Patentansprüche**

1. Zusammensetzungen, daraus herzustellende Formmassen und darauf basierende Erzeugnisse enthaltend auf

   a) 100 Massenanteile wenigstens eines Polyesters,
   b) 70 bis 600 Massenanteile mit wenigstens einem Aminosilan und/oder Epoxysilan oberflächenbehandeltes Aluminiumoxid,
   c) 0.017 bis 12.5 Massenanteile wenigstens eines Phosphitstabilisators.

**2.** Zusammensetzungen und daraus herzustellende Formmassen und darauf basierende Erzeugnisse gemäß Anspruch 1, **dadurch gekennzeichnet, dass** für die Oberflächenbehandlung der Komponente b) wenigstens ein Aminosilan mit der allgemeinen Summenformel

$$(RO)_3\text{-Si-}(CH_2)_n\text{-X}$$

eingesetzt wird, worin

R für einen organischen Rest ausgewählt aus der Gruppe Methyl, Ethyl, i-Propyl und Methoxymethyl steht,
n für eine ganze Zahl von 0 bis 12 (Endwerte eingeschlossen) steht, und
X für einen Rest $NR^1R^2$ steht und
$R^1$ und $R^2$ jeweils unabhängig voneinander für Wasserstoff, für einen $C_1$-$C_6$-Alkylrest oder für einen $C_6$-$C_9$-Cycloalkylrest stehen.

**3.** Zusammensetzungen und daraus herzustellende Formmassen und Erzeugnisse gemäß Anspruch 1 oder 2, **dadurch gekennzeichnet, dass** für die Oberflächenbehandlung des Aluminiumoxids wenigstens ein Aminosilan aus der Gruppe 3-Aminopropyltriethoxysilan, 3-Aminopropyltrimethoxysilan, N-(2-aminoethyl)-3-aminopropyltrimethoxysilan, N-(2-aminoethyl)-3-aminopropyltriethoxysilan, 3-(N-cyclohexylamino)propyltrimethoxysilan und Diethylaminomethyltriethoxysilan eingesetzt wird.

**4.** Zusammensetzungen und daraus herzustellende Formmassen und darauf basierende Erzeugnisse gemäß Anspruch 1, **dadurch gekennzeichnet, dass** für die Oberflächenbehandlung des Aluminiumoxids wenigstens ein Epoxysilan mit der allgemeinen Summenformel

$$E\text{-}R^3\text{-Si}(R^4)_a\text{-}(OR^5)_{3-a}$$

eingesetzt wird, worin

E für eine Glycidylgruppe, eine Glycidyloxygruppe oder eine Epoxycyclohexylgruppe oder für ein Gemisch dieser steht,
$R^3$ für eine $C_1$-$C_4$-Alkylengruppe steht,
$R^4$ und $R^5$ jeweils unabhängig voneinander für $C_1$-$C_4$ Alkylgruppen stehen und
a für 0, 1 oder 2 steht.

**5.** Zusammensetzungen und daraus herzustellende Formmassen und darauf basierende Erzeugnisse gemäß einem der Ansprüche 1 oder 4, **dadurch gekennzeichnet, dass** für die Oberflächenbehandlung des Aluminiumoxids wenigstens ein Epoxysilan aus der Gruppe 2-(3,4-Epoxycyclohexyl)-ethyltrimethoxysilan, (3-Glycidoxypropyl)trimethoxysilan, (3-Glycidoxypropyl)methyldiethoxysilan, 5,6-Epoxyhexyltriethoxysilan, 2-(3,4-Epoxycyclohexyl)ethylmethyldiethoxysilan, (3-Glycidoxypropyl)triethoxysilan, 2-(3,4-Epoxycyclohexyl)ethyltriethoxysilan und (3-Glycidoxypropyl)methyldimethoxy-silan eingesetzt wird.

**6.** Zusammensetzungen und daraus herzustellende Formmassen und darauf basierende Erzeugnisse gemäß einem oder mehreren der Ansprüche 1 bis 5, **dadurch gekennzeichnet, dass** wenigstens ein Phosphitstabilisator aus der Gruppe Tris(2,4-ditert-butylphenyl)phosphit, Bis(2,4-di-tert-butylphenyl)pentaerythritol-diphosphit, Bis(2,6-diter-butyl-4-methylphenyl)pentaerythritol-diphosphit, Bis(2,4-dicumylphenyl)pentaerythritol-diphosphit, Tris(nonylphenyl)phosphit, (2,4,6-tri-t-butylphenol)2-butyl-2-ethyl-1,3-propanediol-phosphit, Tetrakis(2,4-di-tert-butylphenyl)-1,1-biphenyl-4,4'-diylbisphosphonit und polymere Phosphorigsäureester, die Oxetangruppen enthalten und von denen 50% oder mehr aller Moleküle mindestens vier Monomere aus der Gruppe eines zwei- oder mehrwertigen Phenols und/oder Ester der phosphorigen Säure enthalten, eingesetzt wird.

**7.** Zusammensetzungen und daraus herzustellende Formmassen und darauf basierende Erzeugnisse gemäß einem oder mehreren der Ansprüche 1 bis 6, **dadurch gekennzeichnet, dass** diese zusätzlich
d) 0,001 bis 10 Massenanteile wenigstens eines Entformungsmittels enthalten.

**8.** Zusammensetzungen und daraus herzustellende Formmassen und darauf basierende Erzeugnisse gemäß einem oder mehreren der Ansprüche 1 bis 6, **dadurch gekennzeichnet, dass** diese zusätzlich
d) 0,001 bis 10 Massenanteile wenigstens eines Nukleierungsmittels, vorzugsweise Talkum, enthalten.

9.  Zusammensetzungen und daraus herzustellende Formmassen und darauf basierende Erzeugnisse, gemäß einemoder mehreren der Ansprüche 1 bis 6, **dadurch gekennzeichnet, dass** diese zusätzlich
    d) 0,001 bis 10 Massenanteile wenigstens eines Nukleierungsmittels und wenigstens eines Entformungsmittels enthalten, wobei als Nukleierungsmittel vorzugsweise Talkum eingesetzt wird.

10. Zusammensetzungen und daraus herzustellende Formmassen und darauf basierende Erzeugnisse gemäß Anspruch 7 und 9, **dadurch gekennzeichnet, dass** als Entformungsmittel langkettige Fettsäuren, deren Salze, sowie deren Esterderivate oder Amidderivate, Montanwachsester und deren Salze sowie niedermolekulare Polyethylen- bzw. Polypropylenwachse in oxidierter und nicht-oxidierter Form eingesetzt werden.

11. Zusammensetzungen und daraus herzustellende Formmassen und darauf basierende Erzeugnisse gemäß Anspruch 10, **dadurch gekennzeichnet, dass** als Entformungsmittel Ester oder Amide gesättigter oder ungesättigter aliphatischer Carbonsäuren mit 8 bis 40 C-Atomen mit aliphatischen gesättigten Alkoholen oder Aminen mit 2 bis 40 C-Atomen eingesetzt werden.

12. Zusammensetzungen und daraus herzustellende Formmassen und Erzeugnisse gemäß einem oder mehreren der Ansprüche 1 bis 11, **dadurch gekennzeichnet, dass** für die Komponente b) $\alpha$-$Al_2O_3$ eingesetzt wird.

13. Zusammensetzungen und daraus herzustellende Formmassen und Erzeugnisse gemäß einem oder mehreren der Ansprüche 1 bis 12, **dadurch gekennzeichnet, dass** für die Komponente b) ein Aluminiumoxid mit monomodaler Partikelgrößenverteilung eingesetzt wird.

14. Verfahren zur Reduzierung der Abrasivität wärmeleitfähiger, elektrisch isolierender Polyesterzusammensetzungen und daraus herzustellender Formmassen, **dadurch gekennzeichnet, dass** Aluminiumoxid, das mit wenigstens einem Aminosilan und/oder Epoxysilan oberflächenbehandelt ist, mit einer Polyesterzusammensetzung in Kontakt gebracht wird.

15. Verwendung von mit wenigstens einem Aminosilan und/oder Epoxysilan oberflächenbehandeltem Aluminiumoxid zur Reduzierung der Abrasion in Verarbeitungsmaschinen bei der Verarbeitung von Polyesterzusammensetzungen und darauf basierenden Polyesterformmassen.

**Claims**

1.  Compositions, moulding materials producible therefrom and articles of manufacture based thereupon containing

    a) 100 parts by mass of at least one polyester,
    b) 70 to 600 parts by mass of aluminium oxide surface-treated with at least one aminosilane and/or epoxysilane,
    c) 0.017 to 12.5 parts by mass of at least one phosphite stabilizer.

2.  Compositions and moulding materials producible therefrom and articles of manufacture based thereupon according to Claim 1, **characterized in that** for the surface treatment of component b) at least one aminosilane of general empirical formula

    $$(RO)_3\text{-}Si\text{-}(CH_2)_n\text{-}X$$

    is employed, wherein

    R represents an organic radical selected from the group consisting of methyl, ethyl, isopropyl and methoxymethyl,
    n represents an integer from 0 to 12 (end values included), and
    X represents a radical $NR^1R^2$ and

    $R^1$ and $R^2$ each independently of one another represent hydrogen, a $C_1$-$C_6$-alkyl radical or a $C_6$-$C_9$-cycloalkyl radical.

3.  Compositions and moulding materials and articles of manufacture producible therefrom according to Claim 1 or 2, **characterized in that** for the surface-treatment of the aluminium oxide at least one aminosilane from the group of 3-aminopropyltriethoxysilane, 3-aminopropyltrimethoxysilane, N-(2-aminoethyl)-3-aminopropyltrimethoxysilane, N-(2-aminoethyl)-3-aminopropyltriethoxysilane, 3-(N-cyclohexylamino)propyltrimethoxysilane and diethylaminomethyltriethoxysilane is employed.

4. Compositions and moulding materials producible therefrom and articles of manufacture based thereupon according to Claim 1, **characterized in that** for the surface treatment of the aluminium oxide at least one epoxysilane of general empirical formula

$$E\text{-}R^3\text{-}Si(R^4)_a\text{-}(OR^5)_{3-a}$$

is employed, wherein

E represents a glycidyl group, a glycidyloxy group or an epoxycyclohexyl group or a mixture thereof,
$R^3$ represents a $C_1$-$C_4$-alkylene group,
$R^4$ and $R^5$ each independently represent $C_1$-$C_4$-alkyl groups and
a represents 0, 1 or 2.

5. Compositions and moulding materials producible therefrom and articles of manufacture based thereupon according to either of Claims 1 or 4, **characterized in that** for the surface treatment of the aluminium oxide at least one epoxysilane from the group of 2-(3,4-epoxycyclohexyl)-ethyltrimethoxysilane, (3-glycidoxypropyl)trimethoxysilane, (3-glycidoxypropyl)methyldiethoxysilane, 5,6-epoxyhexyltriethoxysilane, 2-(3,4-epoxycyclohexyl)ethylmethyldiethoxysilane, (3-glycidoxypropyl)triethoxysilane, 2-(3,4-epoxycyclohexyl)ethyltriethoxysilane and (3-glycidoxypropyl)methyldimethoxysilane is employed.

6. Compositions and moulding materials producible therefrom and articles of manufacture based thereupon according to one or more of Claims 1 to 5, **characterized in that** at least one phosphite stabilizer from the group of tris(2,4-ditert-butylphenyl)phosphite, bis(2,4-di-tert-butylphenyl)pentaerythritol diphosphite, bis(2,6-di-ter-butyl-4-methylphenyl)pentaerythritol diphosphite, bis(2,4-dicumylphenyl)pentaerythritol diphosphite, tris(nonylphenyl)phosphite, (2,4,6-tri-t-butylphenol)2-butyl-2-ethyl-1,3-propanediol phosphite, tetrakis(2,4-di-tert-butylphenyl)-1,1-biphenyl-4,4'-diylbisphosphonite and polymeric phosphorus acid esters containing oxetane groups of which 50% or more of all molecules contain at least four monomers from the group of a di- or polyhydric phenol and/or ester of phosphorous acid is employed.

7. Compositions and moulding materials producible therefrom and articles of manufacture based thereupon according to one or more of Claims 1 to 6, **characterized in that** they additionally contain
d) 0.001 to 10 parts by mass of at least one demoulding agent.

8. Compositions and moulding materials producible therefrom and articles of manufacture based thereupon according to one or more of Claims 1 to 6, **characterized in that** they additionally contain
d) 0.001 to 10 parts by mass of at least one nucleating agent, preferably talc.

9. Compositions and moulding materials producible therefrom and articles of manufacture based thereupon according to one or more of Claims 1 to 6, **characterized in that** they additionally contain
d) 0.001 to 10 parts by mass of at least one nucleating agent and at least one demoulding agent, wherein talc is preferably employed as the nucleating agent.

10. Compositions and moulding materials producible therefrom and articles of manufacture based thereupon according to Claims 7 and 9, **characterized in that** long-chain fatty acids, salts thereof and also ester derivatives or amide derivatives thereof, montan wax esters and salts thereof and low molecular weight polyethylene/polypropylene waxes in oxidized and non-oxidized form are employed as demoulding agents.

11. Compositions and moulding materials producible therefrom and articles of manufacture based thereupon according to Claim 10, **characterized in that** esters or amides of saturated or unsaturated aliphatic carboxylic acids having 8 to 40 carbon atoms with aliphatic saturated alcohols or amines having 2 to 40 carbon atoms are employed as demoulding agents.

12. Compositions and moulding materials and articles of manufacture producible therefrom according to one or more of Claims 1 to 11, **characterized in that** $\alpha$-$Al_2O_3$ is employed as component b).

13. Compositions and moulding materials and articles of manufacture producible therefrom according to one or more of Claims 1 to 12, **characterized in that** an aluminium oxide having a monomodal particle size distribution is employed as component b).

14. Process for reducing the abrasiveness of thermally conductive, electrically insulating polyester compositions and moulding materials producible therefrom, **characterized in that** aluminium oxide which has been surface-treated with at least one aminosilane and/or epoxysilane is contacted with a polyester composition.

15. Use of aluminium oxide surface-treated with at least one aminosilane and/or epoxysilane for reducing abrasion in processing machinery in the processing of polyester compositions and polyester moulding materials based thereupon.

**Revendications**

1. Compositions, masses de moulage à préparer à partir de celles-ci et produits à base de celles-ci, contenant

   a) pour 100 fractions massiques d'au moins un polyester,
   b) 70 à 600 fractions massiques d'oxyde d'aluminium traité en surface par au moins un aminosilane et/ou époxysilane,
   c) 0,017 à 12,5 fractions massiques d'au moins un stabilisant phosphite.

2. Compositions et masses de moulage à préparer à partir de celles-ci et produits à base de celles-ci selon la revendication 1, **caractérisés en ce que**, pour le traitement de surface du composant b), au moins un aminosilane de formule brute générale

$$(RO)_3\text{-Si-}(CH_2)_n\text{-X}$$

   est utilisé, dans laquelle

   R représente un radical organique choisi dans le groupe méthyle, éthyle, i-propyle et méthoxyméthyle,
   n représente un nombre entier de 0 à 12 (valeurs extrêmes incluses) et
   X représente un radical $NR^1R^2$ et
   $R^1$ et $R^2$ représentent, à chaque fois indépendamment l'un de l'autre, hydrogène, un radical $C_1\text{-}C_6$-alkyle ou un radical $C_6\text{-}C_9$-cycloalkyle.

3. Compositions et masses de moulage et produits à préparer à partir de celles-ci selon la revendication 1 ou 2, **caractérisés en ce que**, pour le traitement de surface de l'oxyde d'aluminium, on utilise au moins un aminosilane du groupe 3-aminopropyltriéthoxysilane, 3-aminopropyltriméthoxysilane, N-(2-aminoéthyl)-3-aminopropyltriméthoxysilane, N-(2-aminoéthyl)-3-aminopropyltriéthoxysilane, 3-(N-cyclohexylamino)propyltriméthoxysilane et diéthylaminométhyltriéthoxysilane.

4. Compositions et masses de moulage à préparer à partir de celles-ci et produits à base de celles-ci selon la revendication 1, **caractérisés en ce que**, pour le traitement de surface de l'oxyde d'aluminium, au moins un époxysilane de formule brute générale

$$E\text{-}R^3\text{-Si}(R^4)_a\text{-}(OR^5)_{3-a}$$

   est utilisé, dans laquelle

   E représente un groupe glycidyle, un groupe glycidyloxy ou un groupe époxycyclohexyle ou un mélange de ceux-ci,
   $R^3$ représente un groupe $C_1\text{-}C_4$-alkylène,
   $R^4$ et $R^5$ représentent, à chaque fois indépendamment l'un de l'autre, des groupes $C_1\text{-}C_4$-alkyle et
   a représente 0, 1 ou 2.

5. Compositions et masses de moulage à préparer à partir de celles-ci et produits à base de celles-ci selon l'une des revendications 1 ou 4, **caractérisés en ce qu'**on utilise, pour le traitement de surface de l'oxyde d'aluminium, au moins un époxysilane du groupe 2-(3,4-époxycyclohexyl)-éthyltriméthoxysilane, (3-glycidoxypropyl)triméthoxysilane, (3-glycidoxypropyl)méthyldiéthoxysilane, 5,6-époxyhexyltriéthoxysilane, 2-(3,4-époxycyclohexyl)éthylméthyldiéthoxysilane, (3-glycidoxypropyl)triéthoxysilane, 2-(3,4-époxycyclohexyl)éthyltriéthoxysilane et (3-glycidoxypropyl)méthyldiméthoxysilane.

6. Compositions et masses de moulage à préparer à partir de celles-ci et produits à base de celles-ci selon l'une ou plusieurs des revendications 1 à 5, **caractérisés en ce qu'**on utilise au moins un stabilisant phosphite du groupe phosphite de tris(2,4-di-tert-butylphényle), diphosphite de bis(2,4-di-tert-butylphényl)pentaérythritol, diphosphite de bis(2,6-di-tert-butyl-4-méthylphényl)pentaérythritol, diphosphite de bis(2,4-dicumylphényl)pentaérythritol, phosphite de tris(nonylphényle), phosphite de (2,4,6-tri-tert-butylphénol)2-butyl-2-éthyl-1,3-propanediol, bis-phosphonite de tétrakis(2,4-di-tert-butylphényl)-1,1-biphényl-4,4'-diyle et esters polymères de l'acide phosphoreux, qui contiennent des groupes oxétane et dont 50% ou plus de toutes les molécules contiennent au moins quatre monomères du groupe phénol bivalent ou polyvalent et/ou d'un ester de l'acide phosphoreux.

7. Compositions et masses de moulage à préparer à partir de celles-ci et produits à base de celles-ci selon l'une ou plusieurs des revendications 1 à 6, **caractérisés en ce qu'**ils contiennent en outre
d) 0,001 à 10 fractions massiques d'au moins un agent de démoulage.

8. Compositions et masses de moulage à préparer à partir de celles-ci et produits à base de celles-ci selon l'une ou plusieurs des revendications 1 à 6, **caractérisés en ce qu'**ils contiennent en outre
d) 0,001 à 10 fractions massiques d'au moins un agent de nucléation, de préférence le talc.

9. Compositions et masses de moulage à préparer à partir de celles-ci et produits à base de celles-ci selon l'une ou plusieurs des revendications 1 à 6, **caractérisés en ce qu'**ils contiennent en outre
d) 0,001 à 10 fractions massiques d'au moins un agent de nucléation et d'au moins un agent de démoulage, le talc étant de préférence utilisé en tant qu'agent de nucléation.

10. Compositions et masses de moulage à préparer à partir de celles-ci et produits à base de celles-ci selon la revendication 7 et 9, **caractérisés en ce qu'**on utilise, en tant qu'agent de démoulage, des acides gras à longue chaîne, leurs sels ainsi que leurs dérivés ester ou amide, les esters de cire de montane et leurs sels ainsi que des cires de polyéthylène ou, selon le cas, de polypropylène de bas poids moléculaire sous forme oxydée ou non oxydée.

11. Compositions et masses de moulage à préparer à partir de celles-ci et produits à base de celles-ci selon la revendication 10, **caractérisés en ce qu'**on utilise, comme agent de démoulage, des esters ou des amides d'acides carboxyliques aliphatiques saturés ou insaturés comprenant 8 à 40 atomes de carbone avec des alcools ou des amines aliphatiquement saturé(e)s comprenant 2 à 40 atomes de carbone.

12. Compositions et masses de moulage et produits à préparer à partir de celles-ci selon l'une ou plusieurs des revendications 1 à 11, **caractérisés en ce que** de l'$\alpha$-Al$_2$O$_3$ est utilisé pour le composant b).

13. Compositions et masses de moulage et produits à préparer à partir de celles-ci selon l'une ou plusieurs des revendications 1 à 12, **caractérisés en ce qu'**un oxyde d'aluminium présentant une répartition granulométrique monomodale est utilisé pour le composant b).

14. Procédé de réduction de l'abrasivité de compositions thermoconductrices, électriquement isolantes de polyester et masses de moulage à préparer à partir de celles-ci, **caractérisé en ce que** de l'oxyde d'aluminium, qui est traité en surface par au moins un aminosilane et/ou époxysilane, est mis en contact avec une composition de polyester.

15. Utilisation d'oxyde d'aluminium traité en surface par au moins un aminosilane et/ou époxysilane pour la réduction de l'abrasion dans des machines de mise en oeuvre lors de la mise en oeuvre de compositions de polyester et de masses de moulage de polyester à base de celles-ci.

**Fig. 1**

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5718971 A
- US 2003194549 A1
- CN 108178909 A
- WO 2010025857 A1
- WO 2009019186 A1
- DE 2407674 A
- DE 2407776 A
- DE 2715932 A
- DE 1900270 A
- EP 3164694 A1
- DE 19802141 C1
- EP 1972921 A1
- DE 102009056503 A1
- DE 102004056520 A1
- DE 4313688 A1
- DE 4119240 C2
- DE 278859 A1
- DE 260764 A1
- DE 232760 A1
- DE 19628348 C1
- DE 69406683 T2, mit Ringsensor
- DE 10218413 B4
- DE 4129105 A1
- US 7547743 B2
- DE 69317121 T2
- WO 2009156342 A1
- EP 1628916 B1
- EP 1523520 B1
- DE 4236122 A
- WO 2013083247 A1

**In der Beschreibung aufgeführte Nicht-Patentliteratur**

- *CHEMICAL ABSTRACTS,* 1344-28-1
- *CHEMICAL ABSTRACTS,* 919-30-2
- *CHEMICAL ABSTRACTS,* 13822-56-5
- *CHEMICAL ABSTRACTS,* 1760-24-3
- *CHEMICAL ABSTRACTS,* 5089-72-5
- *CHEMICAL ABSTRACTS,* 3068-78-8
- *CHEMICAL ABSTRACTS,* 15180-47-9
- *CHEMICAL ABSTRACTS,* 3388-04-3
- *CHEMICAL ABSTRACTS,* 2530-83-8
- *CHEMICAL ABSTRACTS,* 2897-60-1
- *CHEMICAL ABSTRACTS,* 86138-01-4
- *CHEMICAL ABSTRACTS,* 2602-34-8
- *CHEMICAL ABSTRACTS,* 10217-34-2
- *CHEMICAL ABSTRACTS,* 65799-47-5
- *CHEMICAL ABSTRACTS,* 38613-77-3
- *CHEMICAL ABSTRACTS,* 73138-45-1
- Plastics Additives Handbook. Hanser-Verlag, 2001, 80-84, 546-547, 688, , 872-874, 938, , 966
- *CHEMICAL ABSTRACTS,* 1078142-02-5
- *CHEMICAL ABSTRACTS,* 1309-42-8
- *CHEMICAL ABSTRACTS,* 71449-76-8
- *CHEMICAL ABSTRACTS,* 156024-71-4
- Kunststoff-Handbuch Band VIII. Carl Hanser Verlag, 1973, 730-731